# EUROPÄISCHE PATENTSCHRIFT

(11) **EP 3 763 639 B1**
(45) Veröffentlichungstag und Bekanntmachung des Hinweises auf die Patenterteilung: **22.02.2023**
(21) Anmeldenummer: 20176002.2
(22) Anmeldetag: 22.05.2020
(51) Int. Cl.: B65G 17/22, B65G 21/22, B65G 23/38

(54) **TRANSPORTSYSTEM SOWIE BEHANDLUNGSMASCHINE MIT EINEM SOLCHEN TRANSPORTSYSTEM**
TRANSPORT SYSTEM AND TREATMENT MACHINE WITH SUCH A TRANSPORT SYSTEM
SYSTÈME DE TRANSPORT AINSI QUE MACHINE DE TRAITEMENT DOTÉE D'UN TEL SYSTÈME DE TRANSPORT

(30) Priorität: 10.07.2019 DE 102019118663
(43) Veröffentlichungstag der Anmeldung: 13.01.2021
(73) Patentinhaber: Taktomat Kurvengesteuerte Antriebssysteme GmbH, 86554 Pöttmes (DE)
(72) Erfinder: Hofstetter, Norbert, 86676 Hollenbach (DE); Kumeth, Sigmund, 92280 Kastl (DE); Hofstetter, Michael, 86676 Hollenbach (DE)
(74) Vertreter: Glück Kritzenberger Patentanwälte PartGmbB

(56) Entgegenhaltungen:
- WO-A1-2016/140564
- DE-A1- 3 542 198
- DE-A1-102012 104 213
- DE-A1-102013 206 961
- DE-A1-102015 107 113
- DE-A1-102016 108 765
- DE-C1- 3 990 012
- FR-A1- 2 546 142

## Beschreibung

Die Erfindung bezieht sich auf ein Transportsystem zur Beförderung von Gegenständen entlang einer Transportstrecke sowie auf eine Behandlungsmaschine.

Transportsysteme mit umlaufenden Transportelementen, die von kettenartig miteinander verbundenen Transportpaletten gebildet sind, sind in verschiedenen Ausführungen und für verschiedene Anwendungen bekannt.

Auch sind aus dem Stand der Technik bereits Transportsysteme bekannt, bei denen das Transportelement entlang einer Transportstrecke bewegt wird, deren Bewegungsbahn sowohl einen linearen und als auch einen radialen Anteil aufweist. In der Regel ist hierfür zumindest entlang der linearen Bewegung des Transportelementes eine beidseitige Führungseinrichtung der Transportpaletten vorgesehen, die die Transportpaletten parallel der Bewegungsbahn führt.

Entlang der Transportstrecke der Transportpaletten eines derartigen Transportsystems erfolgt beispielsweise eine Inspektion und/oder Bearbeitung und/oder Behandlung von Gegenständen oder Werkstücken. Die Behandlung erfolgt dann beispielsweise auf den sich zwischen dem Kettenrad und der Umlenkung erstreckenden Teillängen der Schlaufe bzw. an den dortigen Abschnitten einer Bewegungsbahn, auf der sich die Transportpaletten oder Basiselementen bzw. die Achsen der Kettengelenke zwischen den Transportpaletten bewegen.

Nachteilig bei derartigen Transportsystemen ist, dass die Transportpaletten eine bestimmte Länge aufweisen, die dann auch dem Teilungsabstand bzw. dem Teilungswinkel des kettenartigen Transportelementes und des Kettenrades entspricht, und dass insbesondere bei einer größeren Länge bzw. bei einem größeren Teilungsabstand, beispielsweise bei einem Teilungsabstand zwischen 80 mm und 150 mm sich der von Kettenantrieben bekannte Polygoneffekt stark bemerkbar macht, so dass zwar bei einem getakteten Antrieb des Kettenrades grundsätzlich ein Weiterschalten des kettenartigen Transportelementes in jedem Bewegungstakt um einen einzigen Teilungsabstand des Transportelementes bzw. Teilungswinkel des Kettenrades problemlos möglich ist, nicht aber ein Weiterschalten in Schritten größer als der Teilungsabstand, also beispielsweise einer Weiterschaltung mit einer Taktung, die zwei, drei oder vier Teilungsabstände umfasst.

Insbesondere ist wegen des Polygoneffekts erfordert ein getaktetes Weiterschalten in Schritten größer als ein einziger Teilungsabstand mit der notwendigen Genauigkeit das Vorsehen von Ausgleichskurven.

Beispielsweise ist aus der auf die Anmelderin zurückgehenden Druckschrift DE 10 2012 104 213 A1 ein Transportsystem bekannt geworden, welches insbesondere für die Verwendung bei Behandlungsmaschinen, vorzugsweise bei Montage- und/oder Fertigungsautomaten bestimmt ist und das zur Vermeidung des sog. Polygoneffektes im Bereich des Transportpaletteneinlaufs und des Transportpalettenauslaufs der Kettenräder und Umlenkungen Transportpalettenführungen vorsieht, deren Verlauf einer den Polygoneffekt vermeidenden Ausgleichskurve entspricht. Bei Verwendung des Transportsystems in einer Behandlungsmaschine sind an Abschnitten der Bewegungsbahn der Transportpaletten zwischen den Kettenrädern Arbeitspositionen oder -stationen gebildet, an denen die Transportpaletten mit auf diesen angeordneten Produkten, Gegenständen oder Werkstücken getaktet vorbeibewegt werden. Ein gewisses Problem besteht aber dann, wenn an Arbeitspositionen oder -stationen jeweils mehrere Behandlungen zeitig nacheinander durchgeführt werden müssen und hierbei die betreffende an einer Arbeitsposition oder - station befindliche Transportpalette dort zwischen jeweils zwei Arbeitsschritten um einen Bewegungs- oder Taktschritt exakt weiterbewegt werden muss, wie dies beispielsweise bei der Montage von Mehrfachsteckerleisten oder -klemmen der Fall ist. Bisher erfordert dies zumindest einen nicht unerheblichen Steuerungsaufwand.

Weiterhin ist aus der ebenfalls auf die Anmelderin zurückgehenden Druckschrift DE 10 2015 107 113 A1 ein Transportsystem bekannt geworden, bei dem die Bewegung der Transportpaletten entlang der Bewegungsbahn und insbesondere auch auf den sich zwischen den Kettenrädern erstreckenden Abschnitten der Bewegungsbahn linear proportional zu der Drehbewegung bzw. zum Drehwinkel der Kettenräder ausgebildet ist, und bei dem speziell auf den sich zwischen den Kettenrädern erstreckenden Abschnitten der Umlaufbahn ein Gleichlauf für die Transportpaletten in der Weise erzielt wird, dass jeder Drehschritt der Kettenräder einen gleich großen Bewegungsschritt der Transportpaletten auf den sich zwischen den Kettenrädern erstreckenden Abschnitten ergibt. Bei der DE 10 2015 107 113 A1 sind die Ausgleichskurven, die an den wenigstens zwei Kettenrädern vor dem Transportpaletteneinlauf sowie nach dem Transportpalettenauslauf vorgesehen sind, jeweils vollständig innerhalb eines Winkelbereichs aufgenommen, der sich zwischen dem Transportpaletteneinlauf und einer die Achse des betreffenden Kettenrades einschließenden Ebene erstreckt bzw. zwischen der sich zwischen dem Transportpalettenauslauf und dieser die Achse des betreffenden Kettenrades einschließenden Ebene erstreckt. Dieser Winkelbereich beträgt dabei 45°. Die Ausgleichskurven befinden sich damit jeweils vollständig innerhalb des Winkelbereichs der Drehbewegung des betreffenden Kettenrades, so dass diejenigen Abschnitte der Bewegungsbahn der Transportpaletten, die sich zwischen den wenigstens zwei Kettenrädern bzw. den Schnittpunkten der vorstehend genannten Ebenen mit dem jeweiligen Teilungskreis des betreffenden Kettenrades erstreckenden, auf ihrer gesamten Länge für die Anordnung von Arbeits- oder Behandlungspositionen usw. genutzt werden können und hierfür vorzugsweise geradlinig verlaufen.

Unabhängig von den speziellen Abmessungen des Transportsystems gemäß der Druckschrift DE 10 2015 107 113 A1 weist der Verlauf des Abstandes zwischen der jeweiligen Ausgleichkurve und dem Teilkreis des Kettenrades eine S-Form auf. Insbesondere weist der Abstand mit steigendem Winkelabstand zunächst einen steilen Abstieg, anschließend einen abgeflachten Verlauf und anschließend erneut einen steilen Anstieg auf, der dann bei einem Winkelabstand, der dem Teilungsabstand der Ausnehmungen eines Kettenrades bzw. der Kettengliedlänge entspricht, in die lineare Transportpalettenführung übergeht. Dies bedingt eine dynamische Bewegungs- bzw. Lastumkehr des auf einer solcherart ausgebildeten Ausgleichkurve geführten Transportelementes. Insbesondere bei Schaltschritten einer Taktung, die über mehrere Kettenglieder, also einem Weiterschalten des kettenartigen Transportelementes mit einem Bewegungstakt größer als der Teilungsabstand, führen diese dynamischen Bewegungseinflüsse zu einem deutlich erhöhten Verschleiß des Transportelementes insbesondere an den Mitnahme- und Führungselementen. Neben dem erhöhten Verschleiß wird durch den dynamischen Bewegungseinfluss jedoch auch der gewünschte Gleichlauf des Transportelementes negativ beeinflusst, was wiederum akustisch durch eine erhöhte Lärmentwicklung des Transportsystems während eines Schaltschrittes wahrnehmbar ist.

DE 10 2016 108765 A1 offenbart ein Transportsystem gemäß dem Oberbegriff des Anspruchs 1.

Aufgabe der Erfindung ist es, ein Transportsystem aufzuzeigen, welches die Nachteile im Stand der Technik vermeidet und insbesondere einen verbesserten Gleichlauf unter gleichzeitiger Vermeidung von negativen dynamischen Bewegungseinflüssen auf das Transportelement während eines Schaltschrittes über mehrere Kettenglieder ermöglicht. Zur Lösung dieser Aufgabe ist ein Transportelement entsprechend dem Patentanspruch 1 ausgebildet. Eine Behandlungsmaschine ist Gegenstand des Patentanspruchs 14.

Die Unteransprüche betreffen dabei besonders vorteilhafte Weiterbildungen der Erfindung. Gemäß einem ersten Aspekt betrifft die vorliegende Erfindung ein Transportsystem zur Beförderung von Gegenständen entlang einer mehrfach umgelenkten Transportstrecke, umfassend wenigstens ein Transportelement, welches aus einer Vielzahl von über Kettengelenke gelenkig miteinander zu einer geschlossenen Schleife verbundenen Kettengliedern besteht und über wenigstens ein Kettenrad in zumindest einer Transportrichtung umlaufend getaktet antreibbar ist, wobei das Transportelement mittels des wenigstens einen Kettenrads sowie zumindest zwei weiteren Umlenkungen als eine geschlossene, mehrfach umgelenkte Schleife mit einem freien Mittelbereich ausgebildet ist, wobei die Kettenglieder als Transportpaletten ausgebildet sind, wobei an dem wenigstens einen Kettenrad in einem vorgegebenen Teilungswinkel Kettenrad-Eingriff- oder Mitnahmebereiche vorgesehen sind, in die an den Kettengelenken der Transportpaletten ausgebildete Führungs- und Lagereinrichtungen bei sich umlaufenden Kettenrad auf jeweils zumindest einem Teilkreis eingreifen, auf dem die Transportpaletten zwischen einem Transportpaletteneinlauf und einem Transportpalettenauslauf zumindest abschnittsweise radial um das wenigstens eine Kettenrad und/oder die wenigstens zwei Umlenkungen geführt sind, wobei zwischen dem wenigstens einem Kettenrad und den entsprechend zugehörigen wenigstens zwei weiteren Umlenkungen jeweils Transportpalettenführungen zum linearen Führen der Mitnahme- und Führungselemente der Transportpaletten jeweils zwischen den mittels des wenigstens einen Kettenrades und der zugehörigen Umlenkung vorgesehen sind, wobei bezogen auf die Transportrichtung jeweils zwischen einem Transportpaletteneinlauf und der entsprechenden linearen Führung mittels der Transportpalettenführungen und zwischen einem Transportpalettenauslauf und der entsprechenden linearen Führung mittels der Transportpalettenführungen jeweils eine Ausgleichkurve vorgesehen ist, entlang der die Führungs- und Lagereinrichtungen der Transportpaletten für einen Polygonausgleich geführt sind, und wobei sich die Ausgleichskurven jeweils über einen Winkelbereich erstrecken, der dem halben Teilungswinkel der Kettenrad- Eingriff oder Mitnahmebereiche entspricht.

Besonders vorteilhaft kann durch solcherart ausgebildete Ausgleichskurven eine dynamische Bewegungs- bzw. Lastumkehr auf dem Transportelement vermieden werden. Insbesondere bei Schaltschritten einer Taktung, die über mehrere Kettenglieder, also einem Weiterschalten des kettenartigen Transportelementes mit einem Bewegungstakt größer als der Teilungsabstand, kommt es zu keinen dynamischen Bewegungseinflüsse damit zu keinem erhöhten Verschleiß des Transportelementes insbesondere an den Mitnahme- und Führungselementen. Auch der gewünschte Gleichlauf des Transportelementes wird dabei positiv beeinflusst, was wiederum zu einem im Vergleich zum Stand der Technik ruhigeren Umschalten des Transportsystems während eines Schaltschrittes führt. Weiterhin vorteilhalt weist ein Transportsystem, bei dem die erfindungsgemäß ausgebildeten Ausgleichskurven vorgesehen sind, über die gesamte Transportelementlänge, d. h. über das gesamte Transportelement, sowie vor, während und nach einem getakteten Schaltschritt eine gleichmäße Spannung auf. Ist das Transportelement dabei als Transportkette ausgebildet, so weist die Transportkette also damit in jeder Position und zu einem jedem Zeitpunkt während des getakteten Umschaltschrittes eine gleichmäßige Kettenspannung über die gesamte Kettenlänge auf. Ferner vorteilhaft bildet die mehrfach umlenkte Schleife des Transportelementes zwischen dem Kettenrad und/oder den drei weiteren Umlenkungen in Draufsicht im Wesentlichen ein Rechteck mit einem freien Mittenbereich MB aus. Das Transportsystem bildet damit insbesondere eine mehrfach, in Karreeform umgelenkte Schleife des Transportelementes mit einem freien Mittenbereich MB aus. In dem freien Mittenbereich ist damit Bauraum geschaffen, in dem mit dem Transportsystem zusammenwirkende Werkzeugmaschinen angeordnet werden können.

Gemäß einer vorteilhaften Ausführungsvariante kann dabei vorgesehen sein, dass ist die jeweilige Ausgleichkurve bezogen auf die entsprechende Drehrichtung des Kettenrades in der zweiten Hälfte des Teilungswinkels des Kettenrades und die Ausgleichkurve bezogen auf die entsprechende Drehrichtung des Kettenrades in der ersten Hälfte des Teilungswinkels des Kettenrades ausgebildet ist.

Gemäß einer weiteren vorteilhaften Ausführungsvariante kann dabei vorgesehen sein, dass die Ausgleichskurven an dem wenigstens einem Kettenrad jeweils vollständig innerhalb eines Winkelbereichs verlaufen, der sich zwischen dem Transportpaletteneinlauf und einer die Achse des betreffenden Kettenrades einschließenden Ebene bzw. der sich zwischen dem Transportpalettenauslauf und dieser die Achse des Kettenrades einschließenden Ebene erstreckt, wobei der Winkelbereich maximal 22,5° Grad beträgt.

Gemäß einer nochmals weiteren vorteilhaften Ausführungsvariante kann dabei vorgesehen sein, dass die Gesamtlänge jeder Ausgleichskurve größer als der halbe Teilungswinkel der Eingriff- oder Mitnahmebereiche und die halbe Kettengliederlänge des Transportelementes ausgebildet ist, und/oder dass bezogen auf die Transportrichtung die auf den Transportpalettenauslauf des Kettenrades und/oder der entsprechenden Umlenkung folgende Ausgleichskurve einen derartigen Verlauf aufweist, dass ein Abstand zwischen dieser Ausgleichskurve und dem Teilkreis in Drehrichtung des Kettenrades mit zunehmendem Winkelabstand von dem Transportpalettenauslauf zunimmt, und zwar entsprechend einem im Wesentlichen sinus-förmigen Verlauf, dessen Steigung am Anfang und am Ende der Ausgleichskurve kleiner ist als in einem mittleren Bereich.

Gemäß einer nochmals weiteren vorteilhaften Ausführungsvariante kann dabei vorgesehen sein, dass bezogen auf die Transportrichtung die dem Transportpaletteneinlauf des Kettenrades und/oder der entsprechenden Umlenkung vorausgehende Ausgleichskurve einen derartigen Verlauf aufweist, dass der Abstand zwischen dieser Ausgleichskurve und dem Teilkreis entgegen der Drehrichtung des Kettenrades mit zunehmendem Winkelabstand von dem Transportpaletteneinlauf zunimmt, und zwar entsprechend einem im Wesentlichen sinus-förmigen Verlauf, dessen Steigung am Anfang und am Ende der Ausgleichskurve kleiner ist als in einem mittleren Bereich.

Gemäß einer nochmals weiteren vorteilhaften Ausführungsvariante kann dabei vorgesehen sein, dass sich an das Ende der jeweiligen Ausgleichskurve ein vorzugsweise geradliniger erster Abschnitt der Bewegungsbahn anschließt.

Gemäß der Erfindung wird vorgesehen, dass die in Transportrichtung jeweils zwischen dem Kettenrad und/oder einer der Umlenkungen aufeinanderfolgenden geradlinigen Abschnitte in einem Winkel gleich 90° vorgesehen sind.

Gemäß der Erfindung wird vorgesehen, dass die mehrfach umlenkte Schleife des Transportelementes zwischen dem Kettenrad und den weiteren Umlenkungen in Draufsicht im Wesentlichen als ein Rechteck mit einem freien Mittenbereich ausgebildet ist.

Gemäß einer nochmals weiteren vorteilhaften Ausführungsvariante kann dabei vorgesehen sein, dass die Bewegungsbahn der Transportpaletten zusätzlich zu den vier geradlinigen Abschnitten vier kreisbogenförmige Abschnitte jeweils zwischen einem Transportpaletteneinlauf und einem Transportpalettenauslauf des Kettenrades und/oder der Umlenkungen sowie der gekrümmten Abschnitte aufweist, an denen die Ausgleichskurven gebildet sind und von denen die Abschnitte jeweils zwischen einem Transportpalettenauslauf des Kettenrades und/oder Umlenkung und einem Transportpaletteneinlauf eines geradlinigen Abschnitts und die Abschnitte jeweils zwischen einem Transportpalettenauslauf eines geradlinigen Abschnittes und dem Transportpaletteneinlauf des Kettenrades und/oder Umlenkung vorgesehen sind.

Gemäß einer nochmals weiteren vorteilhaften Ausführungsvariante kann dabei vorgesehen sein, dass wenigstens ein weiteres, als Umlenkung ausgebildetes Kettenrad vorgesehen ist, das getaktet motorisch antreibbar ist.

Gemäß einer nochmals weiteren vorteilhaften Ausführungsvariante kann dabei vorgesehen sein, dass die Transportpaletten zumindest abschnittsweise entlang der Transportstrecke beidseitig mittels einer ersten und zweiten Führungseinrichtung geführt sind, bei dem ein Kettengelenk jeweils eine zwischen der ersten und zweiten Führungseinrichtung verlaufende Gelenkachse aufweist, die an einem ersten freien Ende mit einer ersten Führungs- und Lagereinrichtung in der ersten Führungseinrichtung und an einem zweiten freien Ende mit einer zweiten Führungs- und Lagereinrichtung in der zweiten Führungseinrichtung geführt ist, wobei die erste und zweite Führungs- und Lagereinrichtung jeweils wenigstens ein erstes und zweites Rollenlager umfassen, die zwischen einer ersten und zweiten, einander gegenüberliegenden und parallel zur Gelenkachse verlaufenden Führungsfläche der jeweiligen Führungseinrichtung geführt sind, wobei das erste Rollerlager in einem ersten Anlageabschnitt der ersten Führungsfläche und das zweite Rollenlager in einem zweiten Anlageabschnitt der zweiten Führungsfläche anliegen und zueinander vorgespannt geführt sind, wobei der erste und zweite Anlageabschnitt entlang der Gelenkachse zueinander versetzt und einander gegenüberliegend sind.

Gemäß einer nochmals weiteren vorteilhaften Ausführungsvariante kann dabei vorgesehen sein, dass die beiden freien Enden der Gelenkachse in der ersten und zweiten Führungseinrichtung in zwei gegenüberliegend und parallel zur Transportrichtung orientierte Führungsebenen geführt sind.

Gemäß einer nochmals weiteren vorteilhaften Ausführungsvariante kann dabei vorgesehen sein, dass das erste und zweite Rollenlager der ersten Führungs- und Lagereinrichtung um die Gelenkachse drehbar und unmittelbar benachbart an dieser im Bereich des ersten freien Endes vorgesehen sind.

Gemäß einer nochmals weiteren vorteilhaften Ausführungsvariante kann dabei vorgesehen sein, dass das erste und zweite Rollenlager der zweiten Führungs- und Lagereinrichtung um die Gelenkachse drehbar und unmittelbar benachbart an dieser im Bereich des zweiten freien Endes vorgesehen sind.

Gemäß einer nochmals weiteren vorteilhaften Ausführungsvariante kann dabei vorgesehen sein, dass das erste Rollenlager der ersten Führungs- und Lagereinrichtung an dem ersten Anlageabschnitt der ersten Führungsfläche anliegend gegen das an dem zweiten Anlageabschnitt der zweiten Führungsfläche anliegende zweite Rollenlager in der ersten Führungseinrichtung vorgespannt geführt ist und das erste Rollenlager der zweiten Führungs- und Lagereinrichtung an dem ersten Anlageabschnitt der ersten Führungsfläche anliegend gegen das an dem zweiten Anlageabschnitt der zweiten Führungsfläche anliegende zweite Rollenlager in der zweiten Führungseinrichtung vorgespannt geführt ist.

Gemäß einer nochmals weiteren vorteilhaften Ausführungsvariante kann dabei vorgesehen sein, dass das erste und zweite Rollenlager der ersten Führungs- und Lagereinrichtung vorgespannt gegenüber dem ersten und zweiten Rollenlager der zweiten Führungs- und Lagereinrichtung geführt sind.

Gemäß einer nochmals weiteren vorteilhaften Ausführungsvariante kann dabei vorgesehen sein, die Ausgleichskurven einstückig mit der entsprechenden Transportpalettenführung ausgebildet sind.

Gemäß einer nochmals weiteren vorteilhaften Ausführungsvariante kann dabei vorgesehen sein, dass die Ausgleichskurven einstückig mit den Umlenkungen ausgebildet sind.

"Teilkreis des Kettenrades" bedeutet im Sinne der Erfindung diejenige Kreisbahn um die Achse des Kettenrades, auf der sich die Kettenrad-Eingriff- oder Mitnahmebereiche bewegen, in die die Mitnahme- und Führungselemente des kettenartigen Transportelementes eingreifen und die beispielsweise von am Umfang des Kettenrades offenen Ausnehmungen zwischen Kettenradzähnen gebildet sind.

"Behandlungsmaschinen" im Sinne der vorliegenden Erfindung sind allgemein Maschinen oder Vorrichtungen zum Behandeln von Produkten oder Gegenständen in unterschiedlichster Weise, insbesondere Fertigungs- und/oder Montagemaschinen oder Fertigungs- und/oder Montagevorrichtungen zum maschinellen Bearbeiten und/oder Verarbeiten und/oder Montieren von Bauteilen oder Baugruppen auch in mehreren zeitlich aufeinander folgenden Arbeitsschritten an jeweils einer und/oder an unterschiedlichen Arbeitspositionen oder - stationen.

"Behandlung" im Sinne der Erfindung bedeutet jegliche Behandlung von Produkten oder Gegenständen im weitesten Sinne, insbesondere Verarbeitung und/oder Bearbeitung und/oder Montage usw.

"Getaktete Bewegung" im Sinne der Erfindung bedeutet eine Bewegung in Schritten mit jeweils anschließender Stillstandsphase, d.h. in Bewegungstakten, von denen jeder eine Bewegungsphase und eine Stillstandsphase aufweist.

"Transportpaletteneinlauf des Kettenrades" ist im Sinne der Erfindung diejenige Winkelstellung der kreisförmigen Bewegungsbahn oder des Teilkreises der Mitnahmebereiche des Kettenrades, an der (Winkelstellung) die Mitnahme- und Führungselemente des kettenartigen Transportelementes erstmals vollständig in jeweils einem Kettenrad-Eingriff- oder Mitnahmebereich des Kettenrades aufgenommen sind bzw. erstmals mit einem Kettenrad-Eingriff- oder Mitnahmebereich vollständig formschlüssig in Eingriff kommen.

"Transportpalettenauslauf des Kettenrades" ist im Sinne der Erfindung derjenige Punkt der kreisförmigen Bewegungsbahn der Kettenrad-Eingriff- oder Mitnahmebereiche des Kettenrades, an dem sich die Mitnahme- und Führungselemente des kettenartigen Transportelementes jeweils wieder aus den Kettenrad-Eingriff- oder Mitnahmebereichen herausbewegen.

"Polygonausgleich" bedeutet im Sinne der Erfindung insbesondere auch einen Ausgleich oder eine Kompensation der durch den Polygoneffekt an den Kettenrädern bedingten sich ändernden Transportgeschwindigkeit oder des sich ändernden Transportweges des Transportelementes in der Weise, dass die Transportgeschwindigkeit oder der Transportweg einer getakteten Bewegung des Transportelementes zumindest an Abschnitten der linearen Führung des Transportsystems konstant oder im Wesentlichen konstant ist, an denen auch Arbeitspositionen oder -stationen vorgesehen sind.

Der Ausdruck "im Wesentlichen" bzw. "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in vereinfachter perspektivischer Darstellung das Transportelement gemäß der Erfindung zur Verwendung bei einer Montage- und/oder Fertigungsmaschine;
- Fig. 2: in sehr vereinfachter schematischer Darstellung und in Draufsicht das Transportelement der Fig. 1;

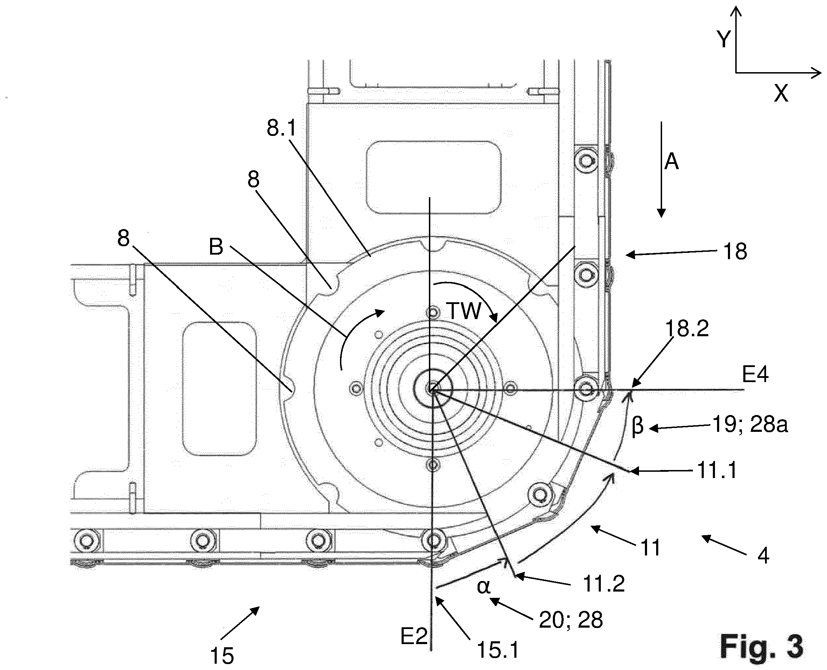

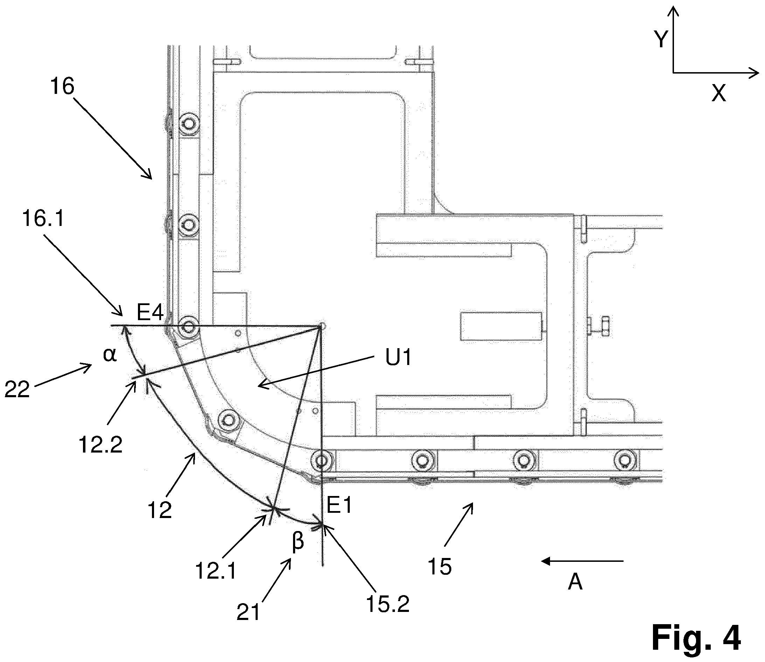

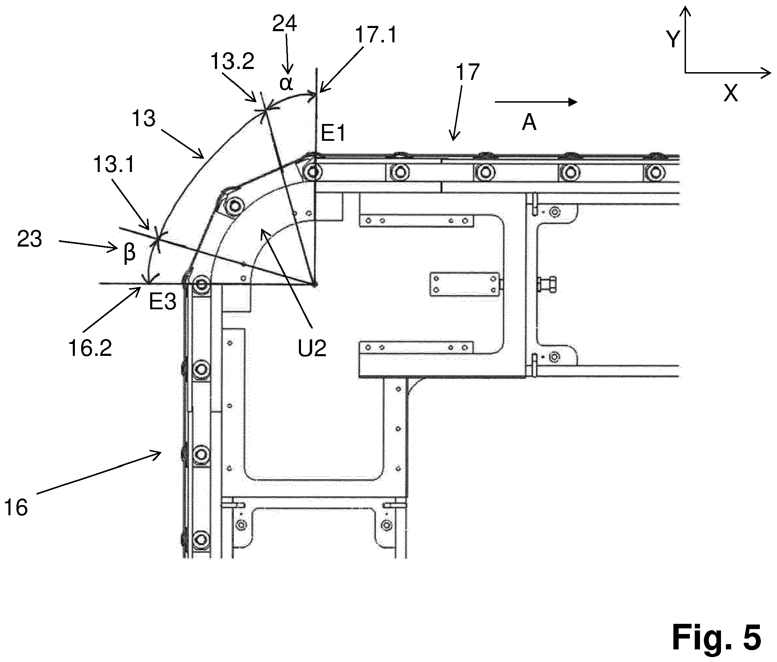

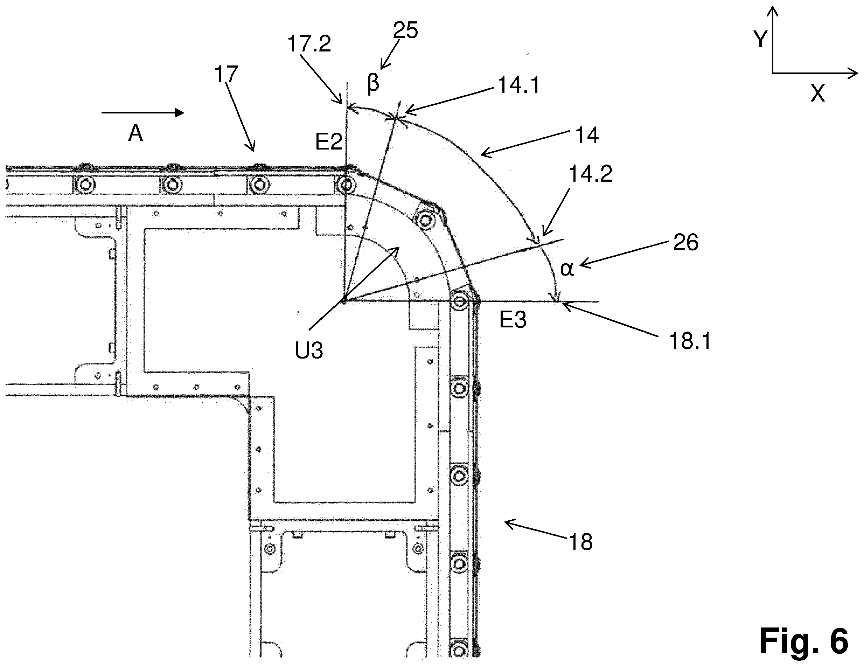

- Fig. 3bis 6: in vereinfachter schematischer Darstellung und in Draufsicht die vier Eckbereiche des Transportsystems gemäß Figur 1;
- Fig. 7: in perspektivischer Darstellung zwei gelenkig miteinander verbundene Transportpaletten des Transportsystems der Fig. 1;
- Fig. 8: einen Vertikalschnitt des Transportsystems auf einer Teillänge zwischen den Kettenrädern des Transportsystems;
- Fig. 9 und 10: jeweils den Verlauf von Ausgleichskurven am Ein- und Auslauf der Umlenkungen, und zwar im Vergleich zu einer Kreisbahn um die Achse des Kettenrades;
- Fig. 11: in Abhängigkeit von einem Winkelabstand α bzw. β der Abstand Δ zwischen der jeweiligen Ausgleichskurve und einem Teilkreis des Kettenrades.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Zudem sind zum besseren Verständnis in den Figuren jeweils senkrecht zueinander verlaufende Koordinaten- oder Raumachsen X, Y und Z angegeben, von denen bei der dargestellten Ausführungsform die X-Achse und Y-Achse eine horizontale oder im Wesentlichen horizontale XY-Ebene definieren und von denen die Z-Achse senkrecht zu dieser XY-Ebene orientiert ist.

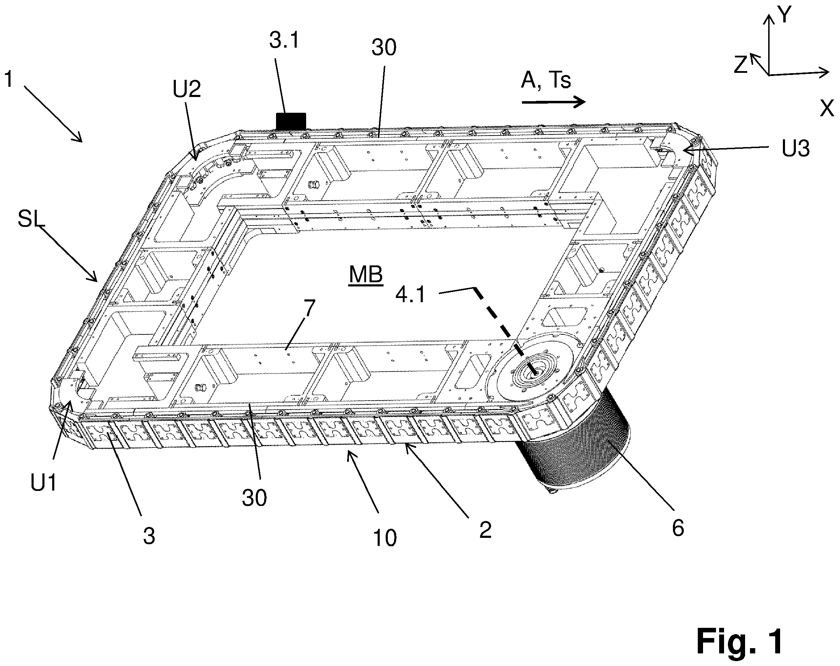

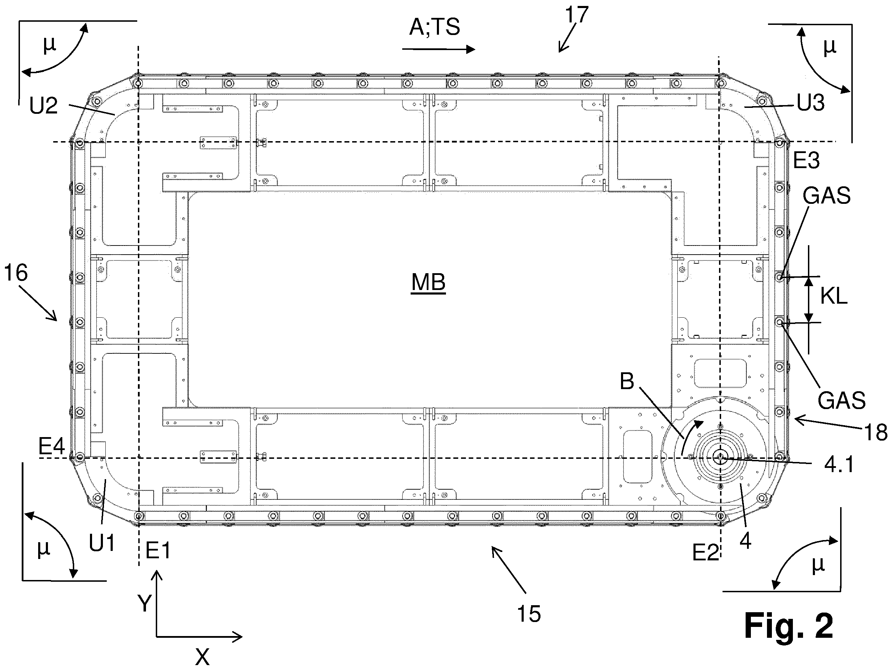

In den Figuren ist mit 1 ein Transportsystem zur Beförderung von Gegenständen entlang einer Transportstrecke TS bezeichnet. Das Transportsystem 1 umfasst wenigstens ein scharnierband- oder kettenartiges Transportelement 2 (Kettenstrang) mit einer Vielzahl von Transportpaletten 3, die über Kettengelenke 20 kettengliederartig und gelenkig miteinander verbunden sind, und zwar zu dem eine geschlossene Schlaufe bildenden Transportelement 2, welches über beispielsweise ein Kettenrad 4 und wenigstens zwei weitere, in horizontaler Richtung, d.h. in Richtung der X-Achse, bzw. in vertikaler Richtung, d.h. in Richtung der Y-Achse, mittels Umlenkungen U1, U2, U3, im vorliegenden Ausführungsbeispiel über drei weitere Umlenkungen U1, U2, U3 mehrfach umgelenkt geführt ist, wie dies in den Figuren 1 und 2 nähergehend dargestellt ist. Im vorliegenden Ausführungsbeispiel wird dabei davon ausgegangen, dass sich die mehrfach umlenkte Schleife SL des Transportelementes 2 zwischen dem Kettenrad 4 und den drei weiteren Umlenkungen U1, U2, U3 derart ausbildet, dass sich in der Figur 2 gezeigten Draufsicht im Wesentlichen ein Rechteck mit einem freien Mittenbereich MB einstellt. Das Transportsystem 1 bildet damit insbesondere eine mehrfach, in Karreeform umgelenkte Schleife SL des Transportelementes 2 mit einem freien Mittenbereich MB aus. Die wenigstens zwei weiteren Umlenkungen U1, U2, U3 können dabei als Umlenkeinrichtungen in Form einer Umlenkkurve oder Umlenkrolle ausgebildet sein. Ebenso ist es jedoch auch denkbar, dass eine der wenigstens zwei weiteren Umlenkungen U1, U2, U3 als weiteres Kettenrad 4, insbesondere als getaktet motorisch angetriebenes Kettenrad ausgebildet ist. Wesentlich dabei ist jedoch, dass das Transportsystem wenigstens ein angetriebenes Kettenrad 4 aufweist.

Vorteilhaft ist wenigstens ein Kettenrad 4 vorgesehen, das unmittelbar, d.h. getriebelos durch einen Elektromotor 6, bevorzugt durch einen Torquemotor, in zumindest einer Transportrichtung A umlaufend antreibbar ausgebildet ist. Das Kettenrad 4 ist mit seiner Achse 4.1 in vertikaler Richtung oder im Wesentlichen in vertikaler Richtung, d.h. parallel zur Z-Achse orientiert in einem Maschinenrahmen 7 gelagert.

Die von dem Transportelement 2 gebildete mehrfach umgelenkte Schleife SL ist somit in einer horizontalen oder im Wesentlichen horizontalen Ebene, d.h. in der XY-Ebene angeordnet. Die Transportpaletten 3 sind jeweils mit einer Aufnahme 3.11 versehen, und zwar für die Aufnahme von Gegenständen (z.B. Werkstücke oder andere Produkte), die mit dem umlaufenden Transportelement 2 in Transportrichtung A bewegt werden.

Außerhalb zumindest des Kettenrades 4, also in dem Transportabschnitt der Transportstrecke TS zwischen dem Kettenrad 4 und den Umlenkungen U1, U2, U3, in dem die Transportpaletten 3 nicht in Eingriff mit dem Kettenrad 4 stehen, sind die Transportpaletten 3 jeweils beidseitig mittels den an dem Maschinenrahmen 7 vorgesehenen Transportpalettenführungen 30, 31, insbesondere einer ersten und zweiten Transportpalettenführung 30, 31, geführt. Mehr im Detail sind dabei die Transportpaletten 3 zwischen dem Kettenrad 4 und der in Transportrichtung A nachfolgenden ersten Umlenkungen U1 beidseitig mittels den am Maschinenrahmen 7 vorgesehenen Transportpalettenführungen 30, 31 geführt. Anschließend werden die Transportpaletten 3 um die erste Umlenkung U1 umlenkt, bevor die Transportpaletten 3 dann wieder in Transportrichtung A folgend zwischen der ersten und der zweiten Umlenkung U1, U2 beidseitig mittels den am Maschinenrahmen 7 vorgesehenen Transportpalettenführungen 30, 31 geführt sind. Analog dazu findet dann wiederum eine Umlenkung der Transportpaletten 3 um die zweite Umlenkung U2 statt, bevor die Transportpaletten 3 dann wieder in Transportrichtung A folgend zwischen der zweiten und der dritten Umlenkung U2, U3 beidseitig mittels den am Maschinenrahmen 7 vorgesehenen Transportpalettenführungen 30, 31 geführt sind. Schließlich findet dann wiederum eine Umlenkung der Transportpaletten 3 um die dritte Umlenkung U3 statt, bevor die Transportpaletten 3 dann wieder in Transportrichtung A folgend zwischen der dritten Umlenkung U3 und dem Kettenrad 4 beidseitig mittels den am Maschinenrahmen 7 vorgesehenen Transportpalettenführungen 30, 31 geführt sind.

In der Ausführungsvariante der Figuren 1 und 2 erstrecken sich die an dem Maschinenrahmen 7 angeordneten, linear und geradlinig verlaufenden Transportpalettenführungen 30, 31 jeweils zumindest zwischen dem Kettenrad 4 und der entsprechend benachbart anschließenden ersten und dritten Umlenkung U1, U3, bzw. zwischen der ersten und der zweiten Umlenkung U1, U2 und führt das Transportelement 2, insbesondere die einzelnen Transportpaletten 3 des Transportelementes 2, zumindest in diesem Transportabschnitt entlang der Transportstrecke TS - also in dem Transportabschnitt der Transportstrecke TS, in dem die Transportpaletten 3 außer Eingriff mit dem Kettenrad 4 stehen. Die einzelnen Transportpaletten 3 sind somit zumindest abschnittsweise entlang der Transportstrecke TS beidseitig mittels der ersten und zweiten Führungseinrichtung 30 und 31 geführt.

Dabei verlaufen die in Transportrichtung A jeweils zwischen dem Kettenrad 4 und/oder einer der Umlenkungen U1, U2, U3 aufeinanderfolgenden Transportpalettenführungen 30, 31 insbesondere nicht parallel, sondern in einem Winkel µ kleiner als 180°, vorzugsweise in einem Winkel µ kleiner oder gleich 120°, besonders vorteilhaft in einem Winkel µ kleiner oder gleich 90°.

Vorzugsweise bilden die zwischen dem Kettenrad 4 und der ersten Umlenkung U1 vorgesehenen Transportpalettenführungen 30, 31 zu den in Transportrichtung A benachbart folgenden Transportpalettenführungen 30, 31 zwischen der ersten Umlenkung U1 und der zweiten Umlenkung U2 einen Winkel µ von näherungsweise 90° aus.

Ebenfalls vorzugsweise bilden die zwischen der ersten Umlenkung U1 und der zweiten Umlenkung U2 vorgesehenen Transportpalettenführungen 30, 31 zu den in Transportrichtung A benachbart folgenden Transportpalettenführungen 30, 31 zwischen der zweiten Umlenkung U2 und der dritten Umlenkung U3 einen Winkel µ von näherungsweise 90° aus.

Ebenfalls vorzugsweise bilden die zwischen der zweiten Umlenkung U2 und der dritten Umlenkung U3 vorgesehenen Transportpalettenführungen 30, 31 zu den in Transportrichtung A benachbart folgenden Transportpalettenführungen 30, 31 zwischen der dritten Umlenkung U3 und dem Kettenrad 4 einen Winkel µ von näherungsweise 90° aus.

Damit bildet die mehrfach umlenkte Schleife SL des Transportelementes 2 zwischen dem Kettenrad 4 und/oder den drei weiteren Umlenkungen U1, U2, U3 in Draufsicht im Wesentlichen ein Rechteck mit einem freien Mittenbereich MB aus. Das Transportsystem 1 bildet damit insbesondere eine mehrfach, in Karreeform umgelenkte Schleife SL des Transportelementes 2 mit einem freien Mittenbereich MB aus. In dem freien Mittenbereich MB ist damit Bauraum geschaffen, in dem mit dem Transportsystem zusammenwirkende Werkzeugmaschinen angeordnet werden können.

Die von dem Transportelement 2 gebildete Schlaufe ist dabei in der Ausführungsvariante der Figuren 1 und 2 in einer horizontalen oder im Wesentlichen horizontalen Ebene, d.h. in der XY-Ebene angeordnet. Alternativ ist es jedoch auch möglich, die von dem Transportelement 2 gebildete Schlaufe in einer vertikalen oder im Wesentlichen vertikalen Ebene, d.h. in einer XZ-Ebene, anzuordnen. Die räumliche Ausrichtung der von dem Transportelement 2 gebildeten Schlaufe ist dabei auf keine der beispielhaft gezeigten Ausführungsvarianten festgelegt. Vielmehr ist das Transportelement 2 in jeder beliebigen Ausrichtung im dreidimensionalen Raum anordenbar.

Die Transportpaletten 3 bilden an ihren jeweiligen Oberseiten 3.1 eine bahnartige Transport- oder Haltefläche aus, an der beispielsweise jeweils eine Aufnahme 3.11, gezeigt in Figur 1, vorgesehen ist und zwar für die Aufnahme von Gegenständen (z.B. Werkstücke oder andere Produkte), die mit dem umlaufenden Transportelement 2 in Transportrichtung A bewegt werden.

Bei der dargestellten Ausführungsform wird das Kettenrad 4 durch den Antrieb 6 bei der für die Fig. 1 und 2 gewählten Darstellung im Uhrzeigersinn entsprechend dem Pfeil B angetrieben.

Das Kettenrad 4 ist dabei als achtteiliges Kettenrad ausgebildet, das acht Kettenrad-Eingriff- oder Mitnahmebereiche oder Aufnahmen 8 aufweist, die als Mitnehmerbereiche für die Kettenglieder des Transportelementes 2 wirken und in vorzugsweise gleichmäßigen Winkelabständen, also Teilungswinkel TW auf einer Kreisbahn oder Teilungskreis 8.1 um die Achse 4.1 des Kettenrades 4 umlaufen. Die zum Umfang des Kettenrades 4 hin offenen taschenartigen Ausnehmungen 8 bilden zwischen sich jeweils einen "Kettenradzahn" und besitzen einen Teilungswinkel TW der gleich der Kettengliedlänge KL der Kettenglieder des Transportelementes 2 ist, d.h. gleich der Länge jeder Transportpalette 3 bzw. des Achsabstandes zwischen zwei in Transportrichtung A aufeinander folgenden Gelenkachsen GAS. Vorzugsweise stellt sich bei einem Kettenrad 4 mit acht Kettenrad- Eingriffs oder Mitnahmebereiche 8 zwischen entsprechend benachbart vorgesehenen Eingriffs- oder Mitnahmebereiche 8 ein Teilungswinkel TW von 45° Grad ein.

Die Eingriff- oder Mitnahmebereiche 8 des Kettenrads 4 greifen dabei drehpositionsabhängig in eine an den jeweiligen Gelenkachsen GAS ausgebildete erste und zweite Führungs- und Lagereinrichtung 32, 33 ein, die vorzugsweise an den jeweiligen freien Enden GAS1, GAS2 einer Gelenkachse GAS des Kettengelenkes 20 der jeweiligen Transportpaletten 3 vorgesehenen sind. In anderen Worten greifen also die ersten und zweiten Führungs- und Lagereinrichtungen 32, 33, die an den freien Enden der jeweiligen Gelenkachsen GAS des Kettengelenkes 4 vorgesehen sind, drehpositionsabhängig formschlüssig in die Eingriff- oder Mitnahmebereiche 8 des Kettenrads 4 ein, so dass mittels des wenigstens einen angetrieben Kettenrades 4 eine Antriebsbewegung in Transportrichtung A auf das Transportelement 2 übertragbar ist. Dabei kann die jeweilige Gelenkachse GAS des entsprechenden Kettengelenkes 20 als einteilige insbesondere einstückige Gelenkstange ausgebildet sein, die sich zwischen ihrem ersten und zweiten freien Ende GAS1, GAS2 derart erstreckt, dass das Kettengelenk 20 jeweils eine zwischen der ersten und zweiten Führungseinrichtung 30, 31 verlaufende Gelenkachse GAS aufweist. Die Gelenkachse GAS bildet dabei einen Gelenkbolzen des Kettengelenkes 20 zwischen zwei benachbarten Transportpaletten 3 aus.

Bei eingeschaltetem Antrieb 6 bewegen sich die Transportpaletten 3 somit in Transportrichtung A auf einer in den Figuren allgemein mit 10 bezeichneten, der geschlossenen, mehrfach umgelenkten Schleife SL des Transportelementes 2 entsprechenden Bewegungsbahn, die zunächst vier kreisbogenförmige Abschnitte 11, 12, 13 und 14 aufweist, von denen der Abschnitt 11 zwischen dem Transportpaletteneinlauf 11.1 und dem Transportpalettenauslauf 11.2 des Kettenrades 4, der Abschnitt 12 zwischen dem Transportpaletteneinlauf 12.1 und dem Transportpalettenauslauf 12.2 der ersten Umlenkung U1, der Abschnitt 13 zwischen dem Transportpaletteneinlauf 13.1 und dem Transportpalettenauslauf 13.2 der zweiten Umlenkung U2, und der Abschnitt 14 zwischen dem Transportpaletteneinlauf 14.1 und dem Transportpalettenauslauf 14.2 der dritten Umlenkung U3 gebildet ist.

Die Bewegungsbahn 10 umfasst weiterhin vier geradlinige Abschnitte 15, 16, 17 und 18, die sich in X-Richtung bzw. Y-Richtung zwischen dem Kettenrad 4 und/oder den Umlenkungen U1, U2, U3 erstrecken.

Ein Transportpaletteneinlauf 15.1 des Abschnittes 15 sowie der Transportpalettenauslauf 17.2 des Abschnittes 17 befinden in einer die Achse 4.1 einschließenden horizontalen YZ-Ebene, die mit E2 bezeichnet ist. Parallel der Ebene E2 befindet sich ein Transportpalettenauslauf 15.2 des Abschnittes 15 und der Transportpaletteneinlauf 17.1 des Abschnittes 17 in einer die Ebene E1.

Ein Transportpaletteneinlauf 16.1 des Abschnittes 16 sowie der Transportpalettenauslauf 18.2 des Abschnittes 18 befinden in einer die Achse 4.1 einschließenden horizontalen YZ-Ebene, die mit E4 bezeichnet ist. Parallel der Ebene E4 befindet sich ein Transportpalettenauslauf 16.2 des Abschnittes 16 und der Transportpaletteneinlauf 18.1 des Abschnittes 18 in einer die Ebene E3. Die Ebene E2 schneidet dabei die Ebene E4 lotrecht in der Achse 4.1.

Die einzelnen Transportpaletten 3 sind mithin zumindest in dem jeweils geradlinigen Abschnitten 15 bis 18 entlang der Transportstrecke TS beidseitig mittels der ersten und zweiten Transportpalettenführung 30 und 31 geführt.

Im dem vorliegenden Ausführungsbeispiel sind die radialen Abschnitte 11 bis 14 sämtlich gleich lang ausgebildet und dabei an dem Teilungswinkel TW des Kettenrades 4 orientiert bzw. nach diesem bemessen. Insbesondere entspricht dabei die Länge der radialen Abschnitte 11 bis 14 dem Teilungswinkel TW des Kettenrades 4. Auch die Transportpaletteneinläufe 11.1, 12.1, 13.1, 14.1, 15.1, 16.1, 17.1, 18.1 und die Transportpalettenausläufe 11.2, 12.2, 13.2, 14.2, 15.2, 16.2, 17.2, 18.2 sind durch den Teilungswinkel TW des Kettenrades 4 bestimmt. Unter Transportpaletteneinläufe 11.1, 12.1, 13.1, 14.1, 15.1, 16.1, 17.1, 18.1 und die Transportpalettenausläufe 11.2, 12.2, 13.2, 14.2, 15.2, 16.2, 17.2, 18.2 kann damit diejenige Winkelposition der Drehbewegung des Kettenrades 4 verstanden werden, an der die jeweilige Transportpalette 3 von dem Kettenrad 4 voll formschlüssig erfasst bzw. von dem Formschluss mit dem Kettenrad 4 wieder frei kommt. Bei der dargestellten Ausführungsform sind die Transportpaletteneinläufe 11.1, 12.1, 13.1, 14.1, 15.1, 16.1, 17.1, 18.1 jeweils in Drehrichtung B um 22,5° gegenüber der die Achse des Kettenrades 4 einschließenden sowie die jeweils geraden Abschnitt 15, 17 orthogonal schneidende Ebene E1 bzw. E2 versetzt, und zwar derart, dass die Transportpaletteneinläufe 11.1, 12.1, 13.1, 14.1, 15.1, 16.1, 17.1, 18.1 jeweils in Drehrichtung B auf diese Ebene E1 bzw. E2 folgen. Analog sind die Transportpalettenausläufe 11.2, 12.2, 13.2, 14.2, 15.2, 16.2, 17.2, 18.2 gegenüber der die Achse 4.1 einschließenden sowie die jeweils geraden Abschnitt 16, 18 orthogonal schneidende Ebene E3 bzw. E4 jeweils um 22,5° versetzt, allerdings derart, dass sich der betreffende Transportpalettenauslauf in Drehrichtung B vor der Ebene E3 bzw. E4 befindet.

Bezogen auf den Teilungswinkel TW eines achteiligen Kettenrades 4von dann 45° Grad, liegt der jeweilige Transportpaletteneinlauf 11.1, 12.1, 13.1, 14.1, 15.1, 16.1, 17.1, 18.1 um einen Winkelbereich α, β von 22,5° Grad versetzt in jeweiliger Drehrichtung B des Kettenrades 4 also um einen Winkelbereich α, β, der dem halben Teilungswinkel TW entspricht.

Die Bewegungsbahn 10 umfasst weiterhin Abschnitte 19 - 26, von denen sich der Abschnitt 19 zwischen dem Transportpalettenauslauf 18.2 und dem Transportpaletteneinlauf 11.1, der Abschnitt 20 zwischen dem Transportpalettenauslauf 11.2 und dem Transportpaletteneinlauf 15.1, der Abschnitt 21 zwischen dem Transportpalettenauslauf 15.2 und dem Transportpaletteneinlauf 12.1 und der Abschnitt 22 zwischen dem Transportpalettenauslauf 12.2 und dem Transportpaletteneinlauf 16.1, der Abschnitt 23 zwischen dem Transportpalettenauslauf 16.2 und dem Transportpaletteneinlauf 13.1, der Abschnitt 24 zwischen dem Transportpalettenauslauf 13.2 und dem Transportpaletteneinlauf 17.1, der Abschnitt 25 zwischen dem Transportpalettenauslauf 17.2 und dem Transportpaletteneinlauf 14.1 und der Abschnitt 26 zwischen dem Transportpalettenauslauf 14.2 und dem Transportpaletteneinlauf 18.1 erstrecken. Mithin erstrecken sich die Abschnitte 19 -26 jeweils über den Winkelbereich α, β von 22,5° Grad.

Die Abschnitte 19-26 sind zumindest hinsichtlich der horizontalen bzw. vertikalen Führung oder der radialen Führung (bezogen auf die Achse 4.1) der Transportpaletten 3 in der nachstehend noch näher beschriebenen Weise so gestaltet, dass beim Umlauf des kettenartigen Transportelementes 2 ein vollständiger Ausgleich des Polygoneffektes (Polygonausgleich) erreicht wird. Insbesondere ist jedem der Abschnitte 19 - 26 jeweils eine Ausgleichskurve 28, 28a zugeordnet, bzw. in jedem der Abschnitte 19 - 26 eine Ausgleichskurve 28, 28a in der nachstehend noch näher beschriebenen Art und Weise ausgebildet. Insbesondere erstreckt sich die jeweilige Ausgleichskurve 28, 28a über den jeweiligen Abschnitt 19 - 26, so dass sich die entsprechende Ausgleichskurve 28, 28a jeweils über einen Winkelbereich α, β erstreckt, der dem halben Teilungswinkel TW der Kettenrad- Eingriff oder Mitnahmebereiche 8 entspricht, also über einen Winkel α, β von 22,5°.

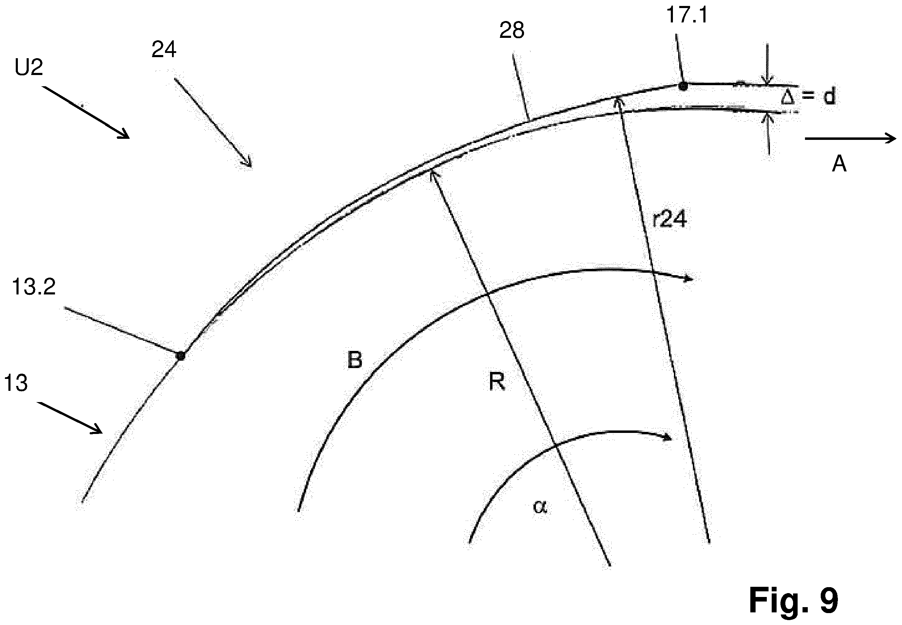

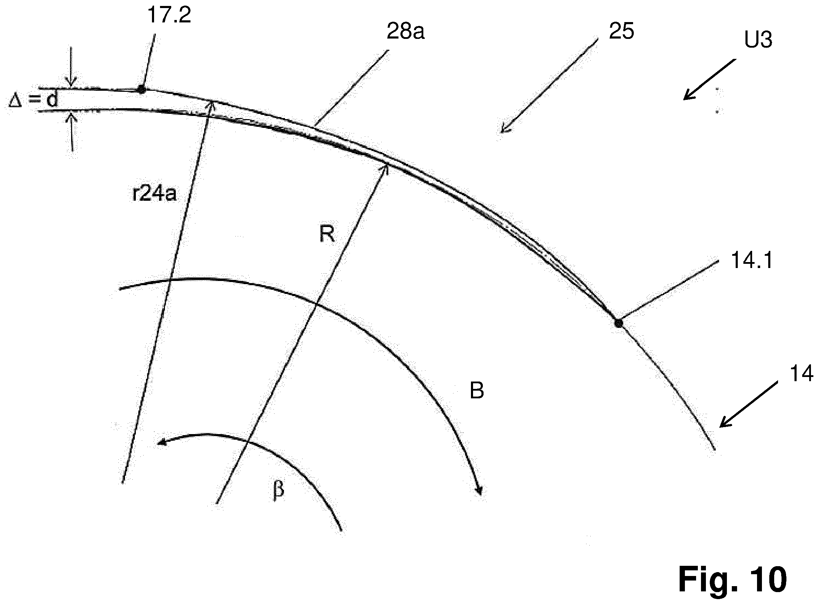

Die Abschnitte 20, 22, 24 und 26 sind hinsichtlich des Verlaufs der Transportpalettenführung 30, 31 für die Transportpaletten 3 grundsätzlich identisch ausgebildet und reichen jeweils nur bis an die Ebene E3 oder E4. Ebenso sind die Abschnitte 19, 21, 23 und 25 hinsichtlich des Verlaufs der Transportpalettenführung 30, 31 für die Transportpaletten 3 grundsätzlich identisch ausgebildet und reichen jeweils nur bis an die Ebene E1 oder E3. Dabei zeigt die Figur 9 exemplarisch an Hand des Abschnitts 24 den für die Abschnitte 20, 22, 24 und 26 gültigen Verlauf der Ausgleichskurven 28 und die Figur 10 exemplarisch an des Abschnitts 25 den für die Abschnitte 19, 21, 23 und 25 gültigen Verlauf der Ausgleichskurven 28a.

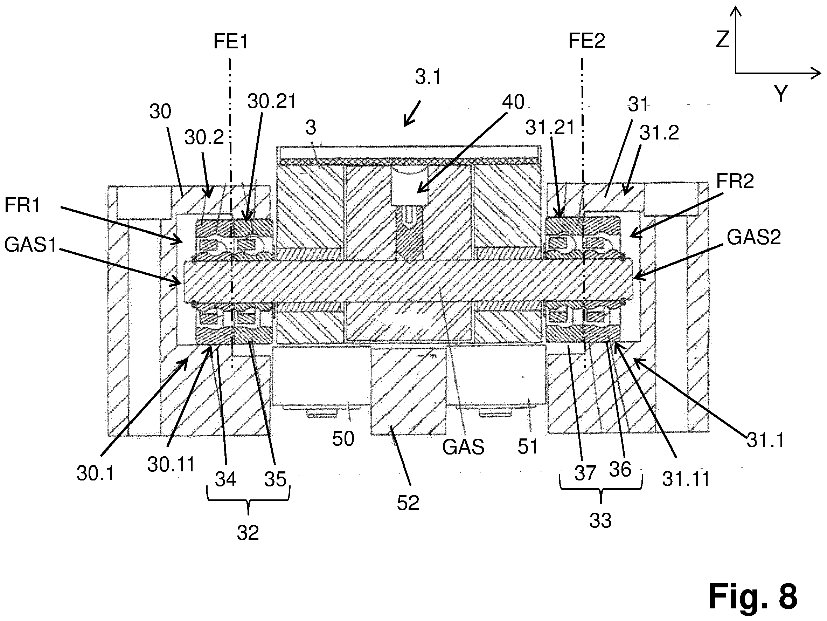

Wie insbesondere in der Figur 8 gezeigt, ist die jeweilige Gelenkachse GAS eines entsprechenden Kettengelenkes 20 dabei an einem ersten freien Ende GAS1 mit der ersten Führungs- und Lagereinrichtung 32 in der ersten Transportpalettenführung 30 und an einem zweiten freien Ende GAS2 mit der zweiten Führungs- und Lagereinrichtung 33 in der zweiten Transportpalettenführung 31 geführt und zwar insbesondere in zwei gegenüberliegenden und parallel zur Transportrichtung A sowie damit vorzugsweise lotrecht zur Gelenkachse GAS orientierten Führungsebenen FE1, FE2. Mithin bildet die erste und zweite Transportpalettenführungen 30, 31 in der Ausführungsvariante der Figur 8 damit eine horizontale Führung zumindest in dem jeweils geradlinigen Abschnitt 15 bis 18 entlang der Transportstrecke TS für die jeweilige Gelenkachse GAS aus.

Zudem umfassen die erste und zweite Führungs- und Lagereinrichtung 32, 33 hierfür jeweils wenigstens ein erstes und zweites Rollenlager 34...37, das beispielsweise als um die Gelenkachse GAS des entsprechenden Kettengelenks 20 drehbar gelagerte Laufrolle ausgebildet sein kann, und die zwischen einer ersten und zweiten, einander gegenüberliegenden und parallel zur Gelenkachse GAS verlaufenden Führungsfläche 30.1, 30.2 bzw. 31.1, 31.2 der jeweiligen ersten und zweiten Transportpalettenführung 30, 31 geführt sind.

Insbesondere sind dabei das erste und zweite Rollenlager 34, 35 der ersten Führungs- und Lagereinrichtung 32 zwischen den einander gegenüberliegenden und parallel zur Gelenkachse GAS verlaufenden Führungsflächen 30.1, 30.2 der ersten Transportpalettenführung 30 und das erste und zweite Rollenlager 36, 37 der zweiten Führungs- und Lagereinrichtung 33 zwischen den einander gegenüberliegenden und parallel zur Gelenkachse GAS verlaufenden Führungsflächen 31.1, 31.2 der zweiten Transportpalettenführung 31 geführt. Somit ist das erste und zweite Rollenlager 34...37 der jeweiligen ersten und zweiten Führungs- und Lagereinrichtung 32, 33 zwischen den jeweiligen Führungsfläche 30.1, 30.2 bzw. 31.1, 31.2 der entsprechenden ersten bzw. zweiten Transportpalettenführung 30, 31 parallel der Transportrichtung A geführt und damit insbesondere lotrecht der Führungsebenen FE1 und FE2.

Dabei ist insbesondere vorgesehen, dass das erste Rollenlager 34 der ersten Führungs- und Lagereinrichtung 32 im Bereich des ersten freien Endes GAS1 um die Gelenkachse GAS drehbar an dieser vorgesehen ist, während das zweite Rollenlager 35 auf der dem zweiten freien Ende GAS2 zugewandten Seite des ersten Rollenlagers 34 ebenfalls um die Gelenkachse GAS drehbar an dieser vorgesehen ist und zwar dem ersten Rollenlager 34 vorzugsweise unmittelbar benachbart anschließend, beispielweise kontaktschlüssig anschließend. Bezogen auf die Längserstreckung der Gelenkachse GAS bildet das erste Rollenlager 34 der ersten Führungs- und Lagereinrichtung 32 ein erstes äußeres Rollenlager 34 und das zweite Rollenlager 35 ein zweites inneres Rollenlager 35 aus, das entlang der Gelenkachse GAS um näherungsweise die Breite des ersten äußeren Rollenlagers 34 in Richtung des zweiten freien Endes GAS2 versetzt an der Gelenkachse GAS unmittelbar benachbart dem ersten äußeren Rollenlager 34 vorgesehen ist.

Auf Grund des spiegelsymmetrischen Aufbaus ist das erste Rollenlager 36 der zweiten Führungs- und Lagereinrichtung 33 im Bereich des zweiten freien Endes GAS2 um die Gelenkachse GAS drehbar vorgesehen, während das zweite Rollenlager 37 auf der dem ersten freien Ende GAS1 zugewandten Seite des ersten Rollenlagers 36 ebenfalls um die Gelenkachse GAS drehbar vorgesehen und zwar dem ersten Rollenlager 36 vorzugsweise unmittelbar benachbart anschließend, beispielweise kontaktschlüssig anschließend. Bezogen auf die Längserstreckung der Gelenkachse GAS bildet damit das erste Rollenlager 36 der zweiten Führungs- und Lagereinrichtung 33 ein erstes äußeres Rollenlager 36 und das zweite Rollenlager 37 ein zweites inneres Rollenlager 37 aus, das entlang der Gelenkachse GAS um näherungsweise die Breite des ersten äußeren Rollenlagers 36 in Richtung des ersten freien Endes GAS1 versetzt an der Gelenkachse GAS unmittelbar benachbart dem ersten äußeren Rollenlager 36 vorgesehen ist.

Dabei sind das jeweilige erste Rollerlager 34, 36 der ersten und zweiten Führungs- und Lagereinrichtung 32, 33 in einem ersten Anlageabschnitt 30.11, 31.11 der jeweiligen ersten Führungsfläche 30.1, 31.1 und das zweite Rollenlager 35, 37 in einem jeweiligen zweiten Anlageabschnitt 30.21, 31.21 der jeweiligen zweiten Führungsfläche 30.2, 31.2 anliegend und zueinander vorgespannt geführt, wobei der jeweilige erste und zweite Anlageabschnitt 30.11 und 30.21 bzw. 31.11 und 31.21 entlang der Gelenkachse GAS zueinander versetzt und einander gegenüberliegend vorgesehen sind.

Vorteilhaft ist das erste Rollenlager 34 der ersten Führungs- und Lagereinrichtung 32 an dem ersten Anlageabschnitt 30.11 der ersten Führungsfläche 30.1 anliegend gegen das an dem zweiten Anlageabschnitt 30.21 der zweiten Führungsfläche 30.2 anliegende zweite Rollenlager 35 in der ersten Transportpalettenführung 30 vorgespannt geführt und das erste Rollenlager 36 der zweiten Führungs- und Lagereinrichtung 33 an dem ersten Anlageabschnitt 31.11 der ersten Führungsfläche 31.1 anliegend gegen das an dem zweiten Anlageabschnitt 31.21 der zweiten Führungsfläche 31.2 anliegende zweite Rollenlager 37 in der zweiten Transportpalettenführung 31 vorgespannt geführt.

Ferner vorteilhaft ist das erste Rollenlager 34 der ersten Führungs- und Lagereinrichtung 32 an dem ersten Anlageabschnitt 30.11 der ersten Führungsfläche 30.1 anliegend und das an dem zweiten Anlageabschnitt 30.21 der zweiten Führungsfläche 30.2 anliegende zweite Rollenlager 35 in der ersten Transportpalettenführung 30 vorgespannt geführt gegenüber dem an dem ersten Anlageabschnitt 31.11 der ersten Führungsfläche 31.1 anliegenden ersten Rollenlager 36 der zweiten Führungs- und Lagereinrichtung 33 und dem an dem zweiten Anlageabschnitt 31.21 der zweiten Führungsfläche 31.2 anliegend geführten zweiten Rollenlager 37 der zweiten Transportpalettenführung 31.

Durch die vorgespannte Führung der Gelenkachse GAS in der ersten und zweiten Transportpalettenführung 30, 31 wirken im Bereich der ersten Führungs- und Lagereinrichtung 32 jeweils von dem ersten bzw. zweiten Anlageabschnitt 30.11, 30.21 der ersten Transportpalettenführung 30 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen der ersten Führungs- und Lagereinrichtung 32 entlang der Längserstreckung der Gelenkachse GAS in der ersten Führungseinrichtung 30 gegenüber der in der zweiten Transportpalettenführung 31 geführten zweiten Führungs- und Lagereinrichtung 33 sicherstellen, während im Bereich der zweiten Führungs- und Lagereinrichtung 33 jeweils von dem ersten bzw. zweiten Anlageabschnitt 31.11, 31.21 der zweiten Transportpalettenführung 31 lotrecht auf die Gelenkachse GAS gerichtete Vorspannkräfte, die somit entlang der Gelenkachse GAS versetzt und gegenüberliegend, also aufeinander zu gerichtet sind und damit ein Verspannen zweiten ersten Führungs- und Lagereinrichtung 33 entlang der Längserstreckung der Gelenkachse GAS in der zweiten Transportpalettenführung 31 gegenüber der in der ersten Transportpalettenführung 30 geführten ersten Führungs- und Lagereinrichtung 32 sicherstellen.

Die erste Transportpalettenführung 30 bildet hierfür zwischen der ersten und zweiten Führungsfläche 30.1, 30.2 einen ersten Führungsraum FR1 aus, der im Bereich der ersten und zweiten Anlagefläche 30.11, 30.21 in den ersten Führungsraum FR1 zurückspringt, also in diesem Bereich gestuft ausgebildet ist, derart, dass die erste Führungsrolle 34 der ersten Führungs- und Lagereinrichtung 32 an der ersten Führungsfläche 30.1 im Bereich des in den ersten Führungsraum FR1 zurückspringenden ersten Anlageabschnitt 30.11 anliegt und die zweite Führungsrolle 35 an der zweiten Führungsfläche 30.2 im Bereich des in den ersten Führungsraum FR1 zurückspringenden zweiten Anlageabschnittes 30.21 anliegt, während die zweite Führungsrolle 35 der ersten Führungs- und Lagereinrichtung 32 an dem nicht in ersten den Führungsraum FR1 zurückspringenden Teilabschnitt von der ersten Führungsfläche 30.1 frei kommt, also insbesondere nicht anliegt und die erste Führungsrolle 34 von dem nicht in den ersten Führungsraum FR1 zurückspringenden Teilabschnitt der zweiten Führungsfläche 30.2 freikommt.

Zudem bildet auch die zweite Transportpalettenführung 31 zwischen der ersten und zweiten Führungsfläche 31.1, 31.2 einen zweiten Führungsraum FR2 aus, der im Bereich der ersten und zweiten Anlagefläche 31.11, 31.21 in den zweiten Führungsraum FR2 zurückspringt, also in diesem Bereich gestuft ausgebildet ist, derart, dass die erste Führungsrolle 36 der zweiten Führungs- und Lagereinrichtung 33 an der ersten Führungsfläche 31.1 im Bereich des in den zweiten Führungsraum FR2 zurückspringenden ersten Anlageabschnitt 31.11 anliegt und die zweite Führungsrolle 37 an der zweiten Führungsfläche 31.2 im Bereich des in den zweiten Führungsraum FR2 zurückspringenden zweiten Anlageabschnittes 31.21 anliegt, während die zweite Führungsrolle 37 der zweiten Führungs- und Lagereinrichtung 33 an dem nicht in zweiten den Führungsraum FR2 zurückspringenden Teilabschnitt von der ersten Führungsfläche 31.1 frei kommt, also insbesondere nicht anliegt und die erste Führungsrolle 36 von dem nicht in den zweiten Führungsraum FR2 zurückspringenden Teilabschnitt der zweiten Führungsfläche 31.2 freikommt.

Wird das Transportelement 2 in Transportrichtung A gefördert, so drehen sich die ersten und zweiten Rollenlager 34...37 hierdurch jeweils gegensinnig zueinander um die durch die Gelenkachse GAS gebildete Drehachse. Dabei kann die Gelenkachse GAS über ein Haltemittel 40, beispielsweise eine Madenschraube, fest aber lösbar in einem Gelenkabschnitt 20.1 der jeweiligen Transportpalette 3 fixiert sein und an einer Drehung, also einer Rotation um die Längserstreckung der Gelenkachse GAS, gehindert werden. Die gegensinnige Drehung der jeweiligen ersten Rollenlager 34, 36 zu den jeweiligen zweiten Rollenlager 35, 37 entsteht durch die jeweils gestufte Ausbildung der entsprechenden ersten und zweiten Führungsräume FR1, FR2, so dass sich die ersten Rollenlager 34, 36 nur an dem ersten Anlageabschnitt, 30.11, 31.11 der jeweiligen ersten Führungsfläche 30.1, 31.1 und die zweiten Rollenlager 35, 37 nur an dem zweiten Anlagenabschnitt 30.21, 31.21 der jeweiligen zweiten Führungsfläche 30.2, 31.2 anliegend abrollen bzw. abwälzen.

Dabei zeigt die Figur 8 eine Ausführungsvariante der Transportpaletten 3, bei der sich zwischen zwei benachbarten Gelenkachsen GAS an der der Oberseite 3.1 gegenüberliegenden Unterseite 3.2 zwei weitere drehbare Rollenlager 50, 51 an der entsprechenden Transportpalette 3 angeordnet befinden, die in der darstellten Ausführungsvariante zur vertikalen Führung der Transportpaletten 3 zwischen der ersten und zweiten Transportpalettenführung 30, 31 sowie einer zwischen den beiden Rollenlagern 50, 51 vorgesehenen weiteren Führungsschiene 52 geführt sind. Die Führungsschiene 52 kann dabei an der ersten und zweiten Transportpalettenführung 30, 31, insbesondere an deren Unterseite, die beispielsweise einen Führungseinrichtungsboden ausbildet, angeordnet, insbesondere verschraubt sein. Insbesondere liegen die beiden Rollenlagen 40,51 hierfür insbesondere an der sich parallel zur Transportrichtung A erstreckenden mittleren Führungsschiene 52 und wälzen bzw. rollen sich an dieser ab.

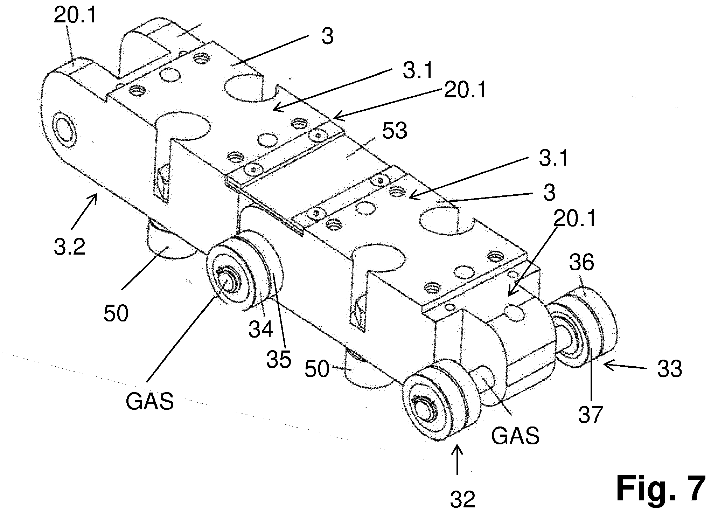

Figur 7 zeigt in perspektivischer Darstellung eine beispielhafte Ausführungsvariante zweier freigestellter und gelenkig über ein Kettengelenk 20 miteinander verbundener Transportpaletten 3 des erfindungsgemäßen Transportsystems 1. Insbesondere weisen die Transportpaletten 3 dabei in ihrem jeweiligen Gelenkabschnitt 20.1 an ihren jeweiligen Oberseiten 3.1 einen elastischen Verbindungsabschnitt 53 auf, der den jeweiligen Gelenkabschnitt 20.1 zweier benachbarter Transportpaletten 3 elastisch überspannt. Insbesondere kann der Verbindungsabschnitt 53 elastisch vorgespannt an den jeweiligen Oberseiten 3.1 zweier benachbarter Transportpaletten 3 angeordnet, insbesondere angenietet, sein. Der Verbindungsabschnitt 53 kann aus einem elastischen natürlichen und/oder künstlichen Textilgewebe hergestellt sein.

An den Abschnitten 20, 22, 24 und 26, die sowohl im Bereich des Kettenrades 4 als auch an den Umlenkungen U1, U2, U3 vorgesehen sind, ist in Figur 9 exemplarisch der Abschnitt 24 der Umlenkung U2 gezeigt. Die erste und zweite Transportpalettenführung 30, 31 ist so ausgebildet, dass sich zumindest die ersten Rollenlager 34, 36 einer entsprechenden Gelenkachse GAS eines Kettengelenkes 20 auf einer Ausgleichskurve 28 bewegen bzw. an der Ausgleichskurve 28geführt werden, die entsprechend den Fig. 9 mit zunehmendem Winkelbereich α (in Drehrichtung B um die Achse 4.1 des Kettenrades 4) vom Transportpalettenauslauf 13.2 radialeinen zunehmenden Abstand Δ aufweist. Insbesondere nimmt der Abstand Δ auf dem Winkelbereich α zu, nachdem in Drehrichtung B gesehen der halbe Teilungswinkel TW eines der Kettenräder 4bzw. eine halbe Kettenlänge KL einer Transportpalette 3 durchlaufen wurde. Mithin ist die jeweilige Ausgleichkurve 28 also in der zweiten Hälfte des Teilungswinkels TW ausgebildet, während die Ausgleichskurve 28a in der ersten Hälfte des Teilungswinkels TW ausgebildet ist, wie dies in Figur 10 nähergehend gezeigt ist. Dabei ist mit R der Radius des Teilkreises 8.1, d.h. der Achsabstand bezeichnet, der zwischen der Achse 4.1 und der Gelenkachse GAS zwischen zwei Transportpaletten 3 besteht, wenn sich diese Gelenkachse GAS auf dem Abschnitten 11 bis 14 der Umlauf- oder Bewegungsbahn 10 befindet. Mit r24 ist dort der radiale Abstand der Ausgleichskurve 28 von der Achse 4.1 bezeichnet.

Bezogen auf jeweils eine Ebene, die die Winkelhalbierende der Drehbewegung des Kettenrades 4 zwischen dem Transportpaletteneinlauf 11.1 und dem Transportpalettenauslauf 11.2 bzw. zwischen dem Transportpaletteneinlauf 12.1 und dem Transportpalettenauslauf 12.2 einschließt und die senkrecht zur XY-Ebene orientiert ist, ist der Verlauf der Ausgleichskurven 28a an den Abschnitten 19, 21, 23 und 25 spiegelsymmetrisch zu den Ausgleichskurven 28 an den Abschnitten 20, 22, 24, 26 ausgebildet. Insbesondere weisen die Ausgleichskurven 28, 28a jedoch denselben relativen Verlauf in Bezug auf den erzeugten Abstand Δ auf dem jeweiligen Winkelbereich α, β auf.

Weiterhin ist bei der dargestellten Ausführungsform die Ausgleichskurve 28 an den Abschnitten 20, 22, 24 und 26 spiegelsymmetrisch zu der Ausgleichskurve 24a der Abschnitte 19, 21, 23 und 25 ausgeführt, und zwar bezogen auf eine nicht eingezeichnete jeweilige Mittelebene. Der Verlauf der Ausgleichskurven 28a der Abschnitte 19, 21, 23 und 25 ist in den Figuren 10 dargestellt. Für die Ausgleichskurven 28a ergibt sich ein Verlauf des Abstandes Δ, der dem Verlauf dieses Abstandes Δ bei den Ausgleichskurven 24 entspricht, allerdings in Abhängigkeit von einem Winkelbereich β (entgegen der Drehrichtung B um die Achse 4.1) vom exemplarischen Transportpaletteneinlauf 14.a der Figur 10.

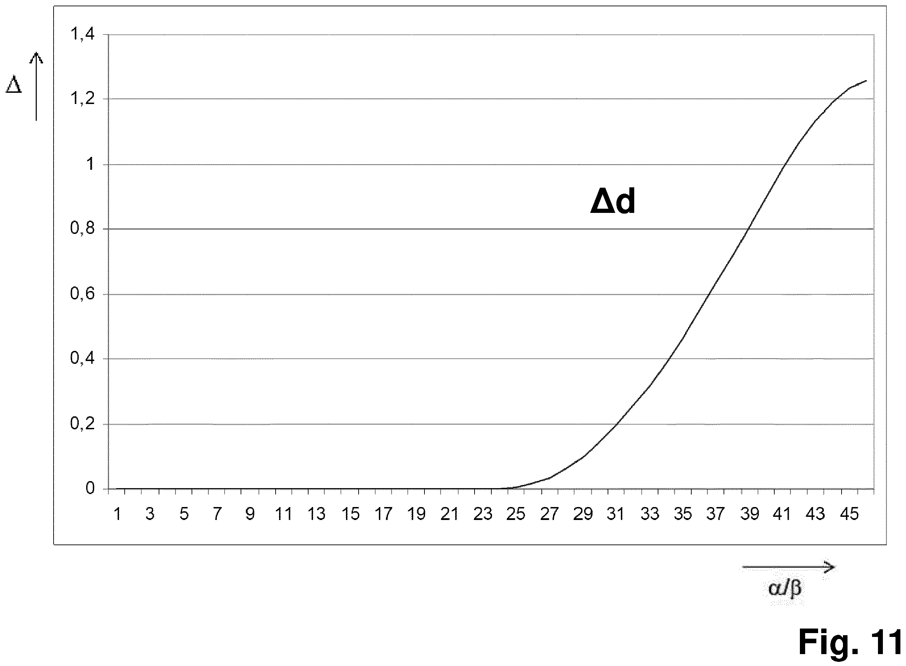

Der von speziellen Abmessungen des Transportsystems 1 unabhängige grundsätzliche Verlauf des Abstandes Δ in Abhängigkeit vom Winkelbereich α bzw. β ist aus der Fig. 11 ersichtlich. Wie dort gezeigt, weist der Abstand Δ mit steigendem Winkelbereich α bzw. β zunächst einen flachen Einlauf, anschließend einen im Vergleich zum Einlauf steileren, jedoch geradlinig verlaufenden Anstieg auf, der dann im Bereich des Auslaufes, also vor Erreichen des gesamten Winkelbereiches α bzw. β, wieder abflacht und in die Transportpalettenführung 30, 31 der Abschnittes 15 bis 18 übergeht. Der maximale Wert des Abstandes Δ ist gleich dem Versatz d. Der Winkelabstand α bzw. (3 Null liegt also vor, wenn sich die betreffende Ausnehmung 8 am entsprechenden Transportpalettenauslauf 11.2,12.2, 13.2, 14.2 befindet, und der Winkel α bzw. (3 = 22,5° Grad liegt vor, wenn der betreffende Kettenrad-Eingriff- oder Mitnahmebereich 8 die Ebene E2 bzw. E4 erreicht hat.

Die Figur 11 ist der Verlauf des Abstandes Δ zwischen der jeweiligen Ausgleichskurve 28, 28a und dem Teilkreis 8.1 in Einheiten angegeben, und zwar in Abhängigkeit von dem Winkelabstand α bzw. β in Drehrichtung B des Kettenrades 4, wobei eine Einheit bevorzugt wiederum 1mm ist. Wie erwähnt, weist Δ in Abhängigkeit vom Winkelabstand α bzw. β einen sinus-ähnlichen, vorzugsweise im Wesentlichen sinus-förmigen Verlauf auf, mit einem flachen Einlauf in einem Winkelbereich α bzw. β von 0°Grad bis etwa 8°Grad, anschließend einen im Vergleich zum Einlauf steileren, jedoch geradlinig verlaufenden Anstieg in einem Winkelbereich α bzw. β zwischen 8°Grad bis etwa 19°Grad auf, der dann im Bereich des Auslaufes, also vor Erreichen des gesamten Winkelbereiches α bzw. β, in einem Winkelbereich α bzw. β zwischen 19°Grad bis 22,5°Grad wieder abflacht und die Transportpalettenführung 30, 31 des Abschnittes 13 bzw. 14 übergeht.

Der im Wesentlichen sinus-förmige Verlauf der Differenz Δ zwischen der Ausgleichskurve 28 bzw. 28a und dem Teilkreis 8.1, auf dem sich die Kettenrad-Eingriff- oder Mitnahmebereiche 8 bewegen, ist unabhängig von speziellen Abmessungen des Transportsystems aber typisch für die Ausgleichskurven 28 und 28a des erfindungsgemäßen Transportsystems bzw. für den Verlauf der Führungen der Abschnitte 19 - 26, die jeweils zwischen den geradlinigen Abschnitten 15 bis 18 und den Kettenrad 4 und/oder den Umlenkungen U1, U2, U3 bzw. den dortigen Transportpaletten-Einläufen und Ausläufen vorgesehen sind. Weiterhin sind die Ausgleichskurven 28 und 28a in jedem Fall so ausgebildet, dass die Ausgleichskurve keinesfalls den Teilkreis 8.1 schneidet, d.h. der Abstand Δ zwischen der Ausgleichskurve 28, 28a und dem Teilkreis 8.1 Null oder größer als Null ist.

Gemäß einer bevorzugten Ausführungsvariante können die Ausgleichskurven 28, 28a an der entsprechenden Transportpalettenführung 30, 31 angeordnet, insbesondere mit dieser fest verbunden, sein. Alternativ können die können die Ausgleichskurven 28, 28a einstückig mit der entsprechenden Transportpalettenführung 30, 31 ausgebildet sein. Dabei kann auch vorgesehen sein, dass die Ausgleichskurven 28, 28a einstückig mit den Umlenkungen U1, U2, U3 ausgebildet sind.

### Bezugszeichenliste

- 1: Transportsystem
- 2: Kettenartigen Transportelement
- 3: Transportpalette
- 3.1: Oberseite
- 3.11: Aufnahme
- 3.2: Unterseite
- 4: Kettenrad
- 4.1: Achse des Kettenrades
- 6: Antriebsrotor (Torquemotor)
- 7: Maschinengestellt
- 8: Kettenrad-Eingriff- oder Mitnahmebereich oder Kettenradausnehmung
- 8.1: Teilkreis der Ausnehmungen 8
- 9: Produkt oder Werkstück
- 10: Bewegungsbahn der Transportpaletten 3
- 11-26: Abschnitte der Bewegungsbahn 10

- 20: Kettengelenk
- 20.1: Gelenkabschnitt
- 28, 28a: Ausgleichskurve

- 30: erste Transportpalettenführung
- 30.1: erste Führungsfläche
- 30.11: erster Anlageabschnitt
- 30.2: zweite Führungsfläche
- 30.21: zweiter Anlageabschnitt
- 31: zweite Transportpalettenführung
- 31.1: erste Führungsfläche
- 31.11: erster Anlageabschnitt
- 31.2: zweite Führungsfläche
- 31.21: zweiter Anlageabschnitt
- 32: erste Führungs- und Lagereinrichtung
- 33: zweite Führungs- und Lagereinrichtung
- 34...37: Rollenlager

- 40: Haltemittel
- 50: Rollenlager
- 51: Rollenlager
- 52: Führungsschiene

- A: Transportrichtung der Transportpaletten 3
- BC: Drehrichtung der Kettenräder 4 und 5
- E1- E4: Ebene
- KL: Kettengliedlänge
- d: Versatz
- R: Radius des Teilkreises 8.1
- r24: radiale Abstand der Ausgleichskurve 24
- r24a: radiale Abstand der Ausgleichskurve 24a
- Δ: Abstand zwischen Ausgleichskurve 24/24a und Teilkreis 8.1
- GAS: Gelenkachse
- GAS1: erstes freies Ende
- GAS2: zweites freies Ende
- FE1: erste Führungsebene
- FE2: zweite Führungsebene
- FR1: erster Führungsraum
- FR2: zweiter Führungsraum
- TS: Transportstrecke
- TF: Transportfläche
- MB: Mittenbereich
- SL: Schleife

## Patentansprüche

1. Transportsystem zur Beförderung von Gegenständen entlang einer mehrfach umgelenkten Transportstrecke (TS), umfassend wenigstens ein Transportelement (2), welches aus einer Vielzahl von über Kettengelenke (20) gelenkig miteinander zu einer geschlossenen Schleife verbundenen Kettengliedern besteht und über wenigstens ein Kettenrad (4) in zumindest einer Transportrichtung (A) umlaufend getaktet antreibbar ist, wobei das Transportelement (2) mittels des wenigstens einen Kettenrads (4, 5) sowie zumindest zwei weiteren Umlenkungen (U1, U2, U3) als eine geschlossene, mehrfach umgelenkte Schleife (SL) mit einem freien Mittenbereich (MB) ausgebildet ist, wobei die Kettenglieder als Transportpaletten (3) ausgebildet sind, wobei an dem wenigstens einen Kettenrad (4) in einem vorgegebenen Teilungswinkel (TW) Kettenrad-Eingriff- oder Mitnahmebereiche (8) vorgesehen sind, in die an den Kettengelenken (20) der Transportpaletten (3) ausgebildete Führungs- und Lagereinrichtungen (32, 33) bei sich umlaufenden Kettenrad (4) auf jeweils zumindest einem Teilkreis (8.1) eingreifen, auf dem die Transportpaletten (3) zwischen einem Transportpaletteneinlauf (11.1, 12.1, 13.1, 14.1) und einem Transportpalettenauslauf (11.2, 12.2, 13.2, 14.2) zumindest abschnittsweise radial um das wenigstens eine Kettenrad (4) und/oder die wenigstens zwei Umlenkungen (U1, U2, U3) geführt sind, wobei zwischen dem wenigstens einem Kettenrad (4) und den entsprechend zugehörigen wenigstens zwei weiteren Umlenkungen (U1, U2, U3) jeweils Transportpalettenführungen (30, 31) zum linearen Führen der Mitnahme- und Führungselemente (19, 20) der Transportpaletten (3) jeweils zwischen den mittels des wenigstens einen Kettenrades (4) und der zugehörigen Umlenkung (U1, U2, U3) vorgesehen sind,
**dadurch gekennzeichnet, dass**
bezogen auf die Transportrichtung (A) jeweils zwischen einem Transportpaletteneinlauf (11.1, 12.1, 13.1, 14.1, 15.1, 16.1, 17.1, 18.1) und der entsprechenden linearen Führung mittels der Transportpalettenführungen (30, 31) und zwischen einem Transportpalettenauslauf (11.2, 12.2, 13.2, 14.2, 15.2, 16.2, 17.2, 18.2) und der entsprechenden linearen Führung mittels der Transportpalettenführungen (30, 31) jeweils eine Ausgleichkurve (28, 28a) vorgesehen ist, entlang der die Führungs- und Lagereinrichtungen (32, 33) der Transportpaletten (3) für einen Polygonausgleich geführt sind, wobei sich die Ausgleichskurven (28, 28a) jeweils über einen Winkelbereich (α, β) erstrecken, der dem halben Teilungswinkel (TW) der Kettenrad- Eingriff oder Mitnahmebereiche (8) entspricht, wobei die in Transportrichtung (A) jeweils zwischen dem Kettenrad (4) und/oder einer der Umlenkungen (U1, U2, U3) aufeinanderfolgenden geradlinigen Abschnitte (15, 16, 17, 18) in einem Winkel (µ) gleich 90° vorgesehen sind und wobei die mehrfach umlenkte Schleife (SL) des Transportelementes (2) zwischen dem Kettenrad (4) und den weiteren Umlenkungen (U1, U2, U3) in Draufsicht im Wesentlichen als ein Rechteck mit dem freien Mittenbereich (MB) ausgebildet ist.

2. Transportsystem nach Anspruch 1, **dadurch gekennzeichnet, dass** ist die jeweilige Ausgleichkurve (28) bezogen auf die entsprechende Drehrichtung des Kettenrades (4) in der zweiten Hälfte des Teilungswinkels (TW) des Kettenrades (4) und die Ausgleichkurve (28a) bezogen auf die entsprechende Drehrichtung des Kettenrades (4) in der ersten Hälfte des Teilungswinkels (TW) des Kettenrades (4) ausgebildet ist.

3. Transportsystem nach Anspruch 1 oder 2, **dadurch gekennzeichnet, dass** die Ausgleichskurven (28, 28a) an dem wenigstens einen Kettenrad (4) jeweils vollständig innerhalb eines Winkelbereichs (α, β) verlaufen, der sich zwischen dem Transportpaletteneinlauf (11.1, 12.1, 13.1, 14.1) und einer die Achse (4.1) des betreffenden Kettenrades (4) einschließenden Ebene (E2, E4) bzw. der sich zwischen dem Transportpalettenauslauf (11.2, 12.2, 13.2, 14.2) und dieser die Achse (4.1) des Kettenrades (4) einschließenden Ebene (E2, E4) erstreckt, wobei der Winkelbereich maximal 22,5° Grad beträgt.

4. Transportsystem nach einem der vorhergehenden Ansprüche, **dadurch gekennzeichnet, dass** bezogen auf die Transportrichtung (A) die auf den Transportpalettenauslauf (11.2, 12.2, 13.2, 14.2) des Kettenrades (4) und/oder der entsprechenden Umlenkung (U1, U2, U3) folgende Ausgleichskurve (28) einen derartigen Verlauf aufweist, dass ein Abstand (Δ) zwischen dieser Ausgleichskurve (28) und dem Teilkreis (8.1) in Drehrichtung (B) des Kettenrades (4) mit zunehmendem Winkelabstand (α) von dem Transportpalettenauslauf (11.2, 12.2, 13.2, 14.2) zunimmt, und zwar entsprechend einem im Wesentlichen sinus-förmigen Verlauf, dessen Steigung am Anfang und am Ende der Ausgleichskurve (28) kleiner ist als in einem mittleren Bereich.

5. Transportsystem nach Anspruch 4, **dadurch gekennzeichnet, dass** bezogen auf die Transportrichtung (A) die dem Transportpaletteneinlauf (11.1, 12.1, 13.1, 14.1) des Kettenrades (4, 5) und/oder der entsprechenden Umlenkung (U1, U2, U3) vorausgehende Ausgleichskurve (28a) einen derartigen Verlauf aufweist, dass der Abstand (Δ) zwischen dieser Ausgleichskurve (28a) und dem Teilkreis (8.1) entgegen der Drehrichtung (B) des Kettenrades (4) mit zunehmendem Winkelabstand (β) von dem Transportpaletteneinlauf (11.1, 12.1, 13.1, 14.1) zunimmt, und zwar entsprechend einem im Wesentlichen sinus-förmigen Verlauf, dessen Steigung am Anfang und am Ende der Ausgleichskurve (28a) kleiner ist als in einem mittleren Bereich.

6. Transportsystem nach einem der vorhergehenden Ansprüche, **dadurch gekennzeichnet, dass** sich an das Ende der jeweiligen Ausgleichskurve (28, 28a) ein vorzugsweise geradlinige erste Abschnitt (15, 16, 17, 18) der Bewegungsbahn (10) anschließt.

7. Transportsystem nach einem der vorhergehenden Ansprüche, **dadurch gekennzeichnet, dass** die Bewegungsbahn (10) der Transportpaletten (3) zusätzlich zu den vier geradlinigen Abschnitten (15, 16, 17 ,18) vier kreisbogenförmige Abschnitte (11, 12, 13, 14) jeweils zwischen einem Transportpaletteneinlauf (11.1, 12.1, 13.1, 14.1, 15.1, 16., 17.1, 18.1) und einem Transportpalettenauslauf (11.2, 12.2, 13.2, 14.2, 15.2, 16.2, 17.2, 18.2) des Kettenrades (4) und/oder der Umlenkungen (U1, U2, U3) sowie der gekrümmten Abschnitte (19-26) aufweist, an denen die Ausgleichskurven (28, 28a) gebildet sind und von denen die Abschnitte (19, 21, 23, 25) jeweils zwischen einem Transportpalettenauslauf (11.2, 12.2, 13.2, 14.2, 15.2, 16.2, 17.2, 18.2) des Kettenrades (4) und/oder Umlenkung (U1, U2, U3) und einem Transportpaletteneinlauf (11.1, 12.1, 13.1, 14.1, 15.1, 16.1, 17.1, 18.1) eines geradlinigen Abschnitts (15, 16, 17, 18) und die Abschnitte (20, 22, 24, 26, 18) jeweils zwischen einem Transportpalettenauslauf (11.2, 12.2, 13.2, 14.2, 15.2, 16.2, 17.2, 18.2) eines geradlinigen Abschnittes (15, 16, 17, 18) und dem Transportpaletteneinlauf (11.1, 12.1, 13.1, 14.1, 15.1, 16.1, 17.1, 18.1) des Kettenrades (4) und/oder Umlenkung (U1, U2, U3) vorgesehen sind.

8. Transportsystem nach einem der vorhergehenden Ansprüche, **dadurch gekennzeichnet, dass** wenigstens ein weiteres, als Umlenkung (U1, U2, U3) ausgebildetes Kettenrad vorgesehen ist, das getaktet motorisch antreibbar ist.

9. Transportsystem nach einem der vorhergehenden Ansprüche, **dadurch gekennzeichnet, dass** die Transportpaletten (3) zumindest abschnittsweise entlang der Transportstrecke (TS) beidseitig mittels einer ersten und zweiten Führungseinrichtung (30, 31) geführt sind, bei dem ein Kettengelenk (20) jeweils eine zwischen der ersten und zweiten Führungseinrichtung (30, 31) verlaufende Gelenkachse (GAS) aufweist, die an einem ersten freien Ende (GAS1) mit einer ersten Führungs- und Lagereinrichtung (32) in der ersten Führungseinrichtung (30) und an einem zweiten freien Ende (GAS2) mit einer zweiten Führungs- und Lagereinrichtung (33) in der zweiten Führungseinrichtung (31) geführt ist, wobei die erste und zweite Führungs- und Lagereinrichtung (32, 33) jeweils wenigstens ein erstes und zweites Rollenlager (34...37) umfassen, die zwischen einer ersten und zweiten, einander gegenüberliegenden und parallel zur Gelenkachse (GAS) verlaufenden Führungsfläche (30.1 und 30.2 bzw. 31.1 und 31.2) der jeweiligen Führungseinrichtung (30, 31) geführt sind, wobei das erste Rollerlager (34, 36) in einem ersten Anlageabschnitt (30.11, 31.11) der ersten Führungsfläche (30.1, 31.1) und das zweite Rollenlager (35, 37) in einem zweiten Anlageabschnitt (30.21, 31.21) der zweiten Führungsfläche (30.2, 31.2) anliegen und zueinander vorgespannt geführt sind, wobei der erste und zweite Anlageabschnitt (30.11 und 30.21 bzw. 31.11 und 31.21) entlang der Gelenkachse (AS) zueinander versetzt und einander gegenüberliegend sind.

10. Transportsystem nach Anspruch 9, **dadurch gekennzeichnet, dass** die beiden freien Enden (GAS1, GAS2) der Gelenkachse (GAS) in der ersten und zweiten Führungseinrichtung (30, 31) in zwei gegenüberliegend und parallel zur Transportrichtung (A) orientierte Führungsebenen (FE1, FE2) geführt sind und/oder dass das erste und zweite Rollenlager (34, 35) der ersten Führungs- und Lagereinrichtung (32) um die Gelenkachse (GAS) drehbar und unmittelbar benachbart an dieser im Bereich des ersten freien Endes (GAS1) vorgesehen sind, und/oder dass das erste und zweite Rollenlager (36, 37) der zweiten Führungs- und Lagereinrichtung (33) um die Gelenkachse (GAS) drehbar und unmittelbar benachbart an dieser im Bereich des zweiten freien Endes (GAS2) vorgesehen sind.

11. Transportsystem nach einem der vorangehenden Ansprüche 9 oder 10, **dadurch gekennzeichnet, dass** das erste Rollenlager (34) der ersten Führungs- und Lagereinrichtung (32) an dem ersten Anlageabschnitt (30.11) der ersten Führungsfläche (30.1) anliegend gegen das an dem zweiten Anlageabschnitt (30.21) der zweiten Führungsfläche (30.2) anliegende zweite Rollenlager (35) in der ersten Führungseinrichtung (30) vorgespannt geführt ist und das erste Rollenlager (36) der zweiten Führungs- und Lagereinrichtung (33) an dem ersten Anlageabschnitt (31.11) der ersten Führungsfläche (31.1) anliegend gegen das an dem zweiten Anlageabschnitt (31.21) der zweiten Führungsfläche (31.2) anliegende zweite Rollenlager (37) in der zweiten Führungseinrichtung (31) vorgespannt geführt ist und/oder dass das erste und zweite Rollenlager (34, 35) der ersten Führungs- und Lagereinrichtung (32) vorgespannt gegenüber dem ersten und zweiten Rollenlager (36, 37) der zweiten Führungs- und Lagereinrichtung (33) geführt sind.

12. Transportsystem nach einem der vorangehenden Ansprüche, **dadurch gekennzeichnet**, die Ausgleichskurven (28, 28a) einstückig mit der entsprechenden Transportpalettenführung (30, 31) ausgebildet sind.

13. Transportsystem nach einem der vorangehenden Ansprüche, **dadurch gekennzeichnet, dass** die Ausgleichskurven (28, 28a) einstückig mit den Umlenkungen (U1, U2, U3) ausgebildet sind.

14. Behandlungsmaschine, beispielsweise Montage- und/oder Fertigungsautomat, mit einem Transportsystem (1) mit Transportpaletten (3) zur Aufnahme von Produkten oder Gegenständen (9), wobei die Transportpaletten (3) auf einer in sich geschlossenen Bewegungsbahn (10) bewegt, vorzugsweise getaktet bewegt werden, und an der Bewegungsbahn (10) Arbeitsstationen vorgesehen sind,
**dadurch gekennzeichnet,**
**dass** das Transportsystem (1) nach einem der vorherigen Ansprüche ausgebildet ist.

## Claims

1. Transport system for conveying objects along a repeatedly redirected conveying route (TS), comprising at least one conveying element (2), which consists of a multiplicity of chain links connected together in an articulated manner by chain joints (20) to form a closed loop and which can be driven circulating in a timed manner by means of at least one chain wheel (4) in at least one conveying direction (A), wherein the conveying element (2) is constituted by means of the at least one chain wheel (4, 5) and at least two further direction changes (U1, U2, U3) as a closed and repeatedly redirected loop (SL) with a free middle region (MB), wherein the chain links are configured as conveyor pallets (3), wherein chain wheel engagement or driver regions (8) are provided on the at least one chain wheel (4) at a predetermined separation angle (TW), in which guiding or bearing units (32, 33) provided at the chain joints (20) of the conveyor pallets (3) engage as the chain wheel (4) circulates in each case on at least one pitch circle (8.1), on which the conveyor pallets (3) are guided radially at least in sections about the at least one chain wheel (4) and/or the at least two direction changes (U1, U2, U3) between a conveyor pallet inlet (11.1, 12.1, 13.1, 14.1) and a conveyor pallet outlet (11.2, 12.2, 13.2, 14.2), wherein conveyor pallets guides (30, 31) for the linear guiding of the driver and guiding elements (19, 20) of the conveyor pallets (3) are each provided between the at least one chain wheel (4) and the associated direction changes (U1, U2, U3),
**characterised in that**,
relative to the conveying direction (A), respectively between the conveyor pallet inlet (11.1, 12.1, 13.1, 14.1, 15.1, 16.1, 17.1, 18.1) and the corresponding linear guide by means of the conveyor pallet guides (30, 31) and between a conveyor outlet (11.2, 12.2, 13.2, 14.2, 15.2, 16.2, 17.2, 18.2) and the corresponding linear guide by means of conveyor pallet guides (30, 31), a compensation curve (28, 28a) is provided in each case, along which the guiding and bearing units (32, 33) of the conveyor pallets (3) are guided for a polygon compensation, wherein the compensation curves (28, 28a) each extend over an angle range (α, β), which corresponds to half the separation angle (TW) of the chain wheel engagement or driver regions (8), wherein the rectilinear sections (15, 16, 17, 18) each following one another in the conveying direction (A) between the chain wheel (4) and/or one of the direction changes (U1, U2, U3) are provided at an angle (µ) equal to 90° and wherein the repeatedly redirected loop (SL) of the conveying element (2) is constituted in plan view essentially as a rectangle with the free middle region (MB) between the chain wheel (4) and the further direction changes (U1, U2, U3).

2. Transport system according to claim 1, **characterised in that** the respective compensation curve (28) is constituted relative to the corresponding direction of rotation of the chain wheel (4) in the second half of the separation angle (TW) of the chain wheel (4) and the compensation curve (28a) is constituted relative to the corresponding direction of rotation of the chain wheel (4) in the first half of the separation angle (TW) of the chain wheel (4).

3. Transport system according to claim 1 or 2, **characterised in that** the compensation curves (28, 28a) each run at the at least one chain wheel (4) completely inside an angular range (α, β), which extends between the conveyor pallet inlet (11.1, 12.1, 13.1, 14.1) and a plane (E2, E4) enclosing the axis (4.1) of the respective chain wheel (4) or which extends between the conveyor pallet outlet (11.2, 12.2, 13.2, 14.2) and this plane (E2, E4) enclosing the axis (4.1) of the chain wheel (4), wherein the angular range amounts to a maximum of 22.5°.

4. Transport system according to any one of the preceding claims, **characterised in that**, relative to the conveying direction (A), the compensation curve (28) following the conveyor pallet outlet (11.2, 12.2, 13.2, 14.2) of the chain wheel (4) and/or the corresponding direction change (U1, U2, U3) has a course which is such that a distance (Δ) between this compensation curve (28) and the pitch circle (8.1) in the direction of rotation (B) of the chain wheel (4) increases with increasing angular distance (α) from the conveyor pallet outlet (11.2, 12.2, 13.2, 14.2), and more precisely corresponding to an essentially sinusoidal course, the gradient of which at the beginning and end of the compensation curve (28) is smaller than in a central region.

5. Transport system according to claim 4, **characterised in that**, relative to the conveying direction (A), the compensation curve (28a) preceding the conveyor pallet inlet (11.1, 12.1, 13.1, 14.1) of the chain wheel (4, 5) and/or the corresponding direction change (U1, U2, U3) has a course which is such that the distance (Δ) between this compensation curve (28a) and the pitch circle (8.1) against the direction of rotation (B) of the chain wheel (4) increases with increasing angular distance (β) from the conveyor pallet inlet (11.1, 12.1, 13.1, 14.1), and more precisely corresponding to an essentially sinusoidal course, the gradient of which at the beginning and end of the compensation curve (28a) is smaller than in a central region.

6. Transport system according to any one of the preceding claims, **characterised in that** the end of the respective compensation curve (28, 28a) is adjoined by a preferably rectilinear first section (15, 16, 17, 18) of the path of motion (10).

7. Transport system according to any one of the preceding claims, **characterised in that** the path of motion (10) of the conveyor pallets (3) comprises, in addition to the four rectilinear sections (15, 16, 17, 18), four circular arc-shaped sections (11, 12, 13, 14) each between a conveyor pallet inlet (11.1, 12.1, 13.1, 14.1, 15.1, 16.1, 17.1, 18.1) and a conveyor pallet outlet (11.2, 12.2, 13.2, 14.2, 15.2, 16.2, 17.2, 18.2) of the chain wheel (4) and/or the direction changes (U1, U2, U3) as well as the curved sections (19-26), at which the compensation curves (28, 28a) are formed and the sections (19, 21, 23, 25) of which are provided each between a conveyor pallet outlet (11.2, 12.2, 13.2, 14.2, 15.2, 16.2, 17.2, 18.2) of the chain wheel (4) and/or direction changes (U1, U2, U3) and a conveyor pallet inlet (11.1, 12.1, 13.1, 14.1, 15.1, 16.1, 17.1, 18.1) of a rectilinear section (15, 16, 17, 18) and the sections (20, 22, 24, 26, 18) are provided each between a conveyor pallet outlet (11.2, 12.2, 13.2, 14.2, 15.2, 16.2, 17.2, 18.2) of a rectilinear section (15, 16, 17, 18) and the conveyor pallet inlet (11.1, 12.1, 13.1, 14.1, 15.1, 16.1, 17.1, 18.1) of the chain wheel (4) and/or direction change (U1, U2, U3).

8. Transport system according to any one of the preceding claims, **characterised in that** at least one further chain wheel configured as a direction change (U1, U2, U3) is provided, which can be motor-driven in a timed manner.

9. Transport system according to any one of the preceding claims, **characterised in that** the conveyor pallets (3) are guided at least in sections along the conveying route (TS) on both sides by means of a first and second guiding unit (30, 31), wherein a chain link (20) in each case comprises an articulated axle (GAS) running between the first and second guiding unit (30, 31), which is guided at a first free end (GAS1) with a first guiding and bearing unit (32) in a first guiding unit (30) and at a second free end (GAS2) with a second guiding and bearing unit (33) in the second guiding unit (31), wherein the first and second guiding and bearing unit (32, 33) each comprise at least a first and second roller bearing (34...37), which are guided between the first and second guide surface (30.1 and 30.2 or 31.1 and 31.2) running towards one another and parallel to the articulated axle (GAS) of the respective guiding unit (30, 31), wherein the first roller bearing (34, 36) abuts on a first bearing section (30.11, 31.11) of the first guide surface (30.1, 31.1) and the second roller bearing (35, 37) abuts on a second bearing section (30.21, 31.21) of the second guide surface (30.2, 31.2) and are guided pretensioned with respect to one another, wherein the first and second bearing section (30.11 and 30.21 or 31.11 and 31.21) are offset with respect to one another and lie opposite one another along the articulated axle (AS).

10. Transport system according to claim 9, **characterised in that** the two free ends (GAS1, GAS2) of the articulated axle (GAS) are guided in the first and second guiding unit (30, 31) in two guide planes (FE1, FE2) orientated opposite one another and parallel to the conveying direction (A) and/or that the first and second roller bearing (34, 35) of the first guiding and bearing unit (32) are provided rotatable around the articulated axle (GAS) and directly adjacent to the latter in the region of the first free end (GAS1), and/or that the first and second roller bearing (36, 37) of the second guiding and bearing unit (33) are provided rotatable about the articulated axle (GAS) and directly adjacent to the latter in the region of the second free end (GAS2).

11. Transport system according to any one of preceding claims 9 or 10, **characterised in that** the first roller bearing (34) of the first guiding and bearing unit (32) abutting on the first bearing section (30.11) of the first guide surface (30.1) is guided pretensioned towards the second roller bearing (35) abutting on the second bearing section (30.21) of the second guide surface (30.2) in the first guiding unit (30) and the first roller bearing (36) of the second guiding and bearing unit (33) abutting on the first bearing section (31.11) of the first guide surface (31.1) is guided pretensioned towards the second roller bearing (37) abutting on the second bearing section (31.21) of the second guide surface (31.2) in the second guiding unit (31) and/or that the first and the second roller bearings (34, 35) of the first guiding and bearing unit (32) are guided pretensioned towards the first and second roller bearing (36, 37) of the second guiding and bearing unit (33).

12. Transport system according to any one of the preceding claims, **characterised in that** the compensation curves (28, 28a) are constituted in one piece with the corresponding conveyor pallet guide (30, 31).

13. Transport system according to any one of the preceding claims, **characterised in that** the compensation curves (28, 28a) are constituted integral with the direction changes (U1, U2, U3).

14. A handling machine, for example an automatic assembly and/or manufacturing machine, with a transport system (1) comprising conveyor pallets (3) for receiving products or objects (9), wherein the conveyor pallets (3) are moved on a self-contained path of motion (10), preferably moved in a timed manner, and work stations are provided on the path of motion (10),
**characterised in that**
the transport system (1) is configured according to any one of the preceding claims.

## Revendications

1. Système de transport pour l'acheminement d'objets le long d'une voie de transport à plusieurs déviations (TS), comportant au moins un élément de transport (2) constitué d'une pluralité de maillons de chaîne reliés entre eux de façon articulée par le biais d'articulations de chaîne (20) de manière à former une boucle fermée et apte à être actionné circonférentiellement de façon cadencée dans au moins une direction de transport (A) par le biais d'au moins une roue de chaîne (4), dans lequel l'élément de transport (2) est conçu comme une boucle fermée à plusieurs déviations (SL) avec une région centrale libre (MB) au moyen de l'au moins une roue de chaîne (4, 5) et d'au moins deux autres déviations (U1, U2, U3), dans lequel les maillons de chaîne sont conçus comme des palettes de transport (3), dans lequel il est prévu des régions d'engagement ou d'entraînement de roue de chaîne (8) sous un angle de division prédéfini (TW) sur l'au moins une roue de chaîne (4), dans lesquelles s'engagent des dispositifs de guidage et de support (32, 33) réalisés sur les articulations de chaîne (20) des palettes de transport (3) pendant la rotation de la roue de chaîne (4) respectivement sur au moins un cercle partiel (8.1), sur lequel les palettes de transport (3) sont guidées au moins partiellement radialement autour de l'au moins une roue de chaîne (4) et/ou des au moins deux déviations (U1, U2, U3) entre une entrée de palettes de transport (11.1, 12.1, 13.1, 14.1) et une sortie de palettes de transport (11.2, 12.2, 13.2, 14.2), dans lequel des guides de palettes de transport (30, 31) sont prévus respectivement entre l'au moins une roue de chaîne (4) et les au moins deux autres déviations (U1, U2, U3) correspondantes pour le guidage linéaire des éléments d'entraînement et de guidage (19, 20) des palettes de transport (3) respectivement entre l'au moins une roue de chaîne (4) et la déviation (U1, U2, U3) correspondante,
**caractérisé en ce que**
par rapport à la direction de transport (A), il est prévu respectivement une courbe de compensation (28, 28a) entre une entrée de palettes de transport (11.1, 12.1, 13.1, 14.1, 15.1, 16.1, 17.1, 18.1) et le guide linéaire correspondant au moyen des guides de palettes de transport (30, 31) et entre une sortie de palettes de transport (11.2, 12.2, 13.2, 14.2, 15.2, 16.2, 17.2, 18.2) et le guide linéaire correspondant au moyen des guides de palettes de transport (30, 31), le long de laquelle les dispositifs de guidage et de support (32, 33) des palettes de transport (3) sont guidés pour une compensation polygonale, dans lequel les courbe de compensation (28, 28a) s'étendent respectivement sur une plage angulaire (α, β), laquelle correspond à la moitié de l'angle de division (TW) des régions d'engagement ou d'entraînement de roue de chaîne (8), dans lequel les sections rectilignes (15, 16, 17, 18) se succédant respectivement entre la roue de chaîne (4) et/ou l'une des déviations (U1, U2, U3) dans la direction de transport (A) sont prévues sous un angle (µ) égal à 90° et dans lequel la boucle à plusieurs déviations (SL) de l'élément de transport (2) est réalisée essentiellement comme un rectangle avec une région centrale libre (MB) entre la roue de chaîne (4) et les autres déviations (U1, U2, U3) dans une vue d'au-dessus.

2. Système de transport selon la revendication 1, **caractérisé en ce que** la courbe de compensation (28) respective est réalisée dans la deuxième moitié de l'angle de division (TW) de la roue de chaîne (4) par rapport à la direction de rotation correspondante de la roue de chaîne (4) et la courbe de compensation (28a) est réalisée dans la première moitié de l'angle de division (TW) de la roue de chaîne (4) par rapport à la direction de rotation correspondante de la roue de chaîne (4).

3. Système de transport selon la revendication 1 ou 2, **caractérisé en ce que** les courbes de compensation (28, 28a) évoluent sur l'au moins une roue de chaîne (4) respectivement complètement à l'intérieur d'une plage angulaire (α, β) s'étendant entre l'entrée de palettes de transport (11.1, 12.1, 13.1, 14.1) et un plan (E2, E4) incluant l'axe (4.1) de la roue de chaîne (4) concernée ou s'étendant entre la sortie de palettes de transport (11.2, 12.2, 13.2, 14.2) et ce plan (E2, E4) incluant l'axe (4.1) de la roue de chaîne (4), la plage angulaire mesurant 22.5° degrés maximum.

4. Système de transport selon l'une des revendications précédentes, **caractérisé en ce que** par rapport à la direction de transport (A), la courbe de compensation (28) consécutive à la sortie de palettes de transport (11.2, 12.2, 13.2, 14.2) de la roue de chaîne (4) et/ou de la déviation (U1, U2, U3) correspondante présente une tracé tel qu'un écart (Δ) entre cette courbe de compensation (28) et le cercle partiel (8.1) augmente dans la direction de rotation (B) de la roue de chaîne (4) avec un écart angulaire croissant (α) par rapport à la sortie de palettes de transport (11.2, 12.2, 13.2, 14.2), et notamment selon un tracé essentiellement sinusoïdal, dont la pente est plus petite au début et à la fin de la courbe de compensation (28) que dans une région centrale.

5. Système de transport selon la revendication 4, **caractérisé en ce que** par rapport à la direction de transport (A), la courbe de compensation (28a) précédant l'entrée de palettes de transport (11.1, 12.1, 13.1, 14.1) de la roue de chaîne (4, 5) et/ou de la déviation (U1, U2, U3) correspondante présente une tracé tel que l'écart (Δ) entre cette courbe de compensation (28a) et le cercle partiel (8.1) augmente inversement à la direction de rotation (B) de la roue de chaîne (4) avec un écart angulaire croissant (β) par rapport à l'entrée de palettes de transport (11.1, 12.1, 13.1, 14.1), et notamment selon un tracé essentiellement sinusoïdal, dont la pente est plus petite au début et à la fin de la courbe de compensation (28a) que dans la région centrale.

6. Système de transport selon l'une des revendications précédentes, **caractérisé en ce qu'**une première section de préférence rectiligne (15, 16, 17, 18) de la voie de déplacement (10) prolonge l'extrémité de la courbe de compensation (28, 28a) respective.

7. Système de transport selon l'une des revendications précédentes, **caractérisé en ce qu'**en plus des quatre sections rectilignes (15, 16, 17, 18), la voie de déplacement (10) des palettes de transport (3) présente quatre sections en arc de cercle (11, 12, 13, 14) respectivement entre une entrée de palettes de transport (11.1, 12.1, 13.1, 14.1, 15.1, 16.1, 17.1, 18.1) et une sortie de palettes de transport (11.2, 12.2, 13.2, 14.2, 15.2, 16.2, 17.2, 18.2) de la roue de chaîne (4) et/ou des déviations (U1, U2, U3) ainsi que des sections courbées (19-26), sur lesquelles sont formées les courbes de compensation (28, 28a) et parmi lesquelles les sections (19, 21, 23, 25) sont prévues respectivement entre une sortie de palettes de transport (11.2, 12.2, 13.2, 14.2, 15.2, 16.2, 17.2, 18.2) de la roue de chaîne (4) et/ou de la déviation (U1, U2, U3) et une entrée de palettes de transport (11.1, 12.1, 13.1, 14.1, 15.1, 16.1, 17.1, 18.1) d'une section rectiligne (15, 16, 17, 18), et les sections (20, 22, 24, 26, 18) sont prévues respectivement entre une sortie de palettes de transport (11.2, 12.2, 13.2, 14.2, 15.2, 16.2, 17.2, 18.2) d'une section rectiligne (15, 16, 17, 18) et l'entrée de palettes de transport (11.1, 12.1, 13.1, 14.1, 15.1, 16.1, 17.1, 18.1) de la roue de chaîne (4) et/ou de la déviation (U1, U2, U3).

8. Système de transport selon l'une des revendications précédentes, **caractérisé en ce qu'**il est prévu au moins une autre roue de chaîne conçue comme une déviation (U1, U2, U3), laquelle peut être actionnée par moteur de façon cadencée.

9. Système de transport selon l'une des revendications précédentes, **caractérisé en ce que** les palettes de transport (3) sont guidées au moins partiellement le long de la voie de transport (TS) de part et d'autre au moyen d'un premier et d'un deuxième dispositif de guidage (30, 31), dans lequel une articulation de chaîne (20) présente respectivement un axe d'articulation (GAS) s'étendant entre les premier et deuxième dispositifs de guidage (30, 31), lequel est guidé dans le premier dispositif de guidage (30) à une première extrémité libre (GAS1) avec un premier dispositif de guidage et de support (32) et dans le deuxième dispositif de guidage (31) à une deuxième axe longitudinal (GAS2) avec un deuxième dispositif de guidage et de support (33), dans lequel les premier et deuxième dispositifs de guidage et de support (32, 33) comportent respectivement au moins un premier et un deuxième palier à roulement (34...37) guidés entre une première et une deuxième surface de guidage (30.1 et 30.2 ou 31.1 et 31.2) opposées du dispositif de guidage (30, 31) respectif, lesquelles s'étendent parallèlement à l'axe d'articulation (GAS), dans lequel le premier palier à roulement (34, 36) s'appuie dans une première section d'appui (30.11, 31.11) de la première surface de guidage (30.1, 31.1) et le deuxième palier à roulement (35, 37) s'appuie dans une deuxième section d'appui (30.21, 31.21) de la deuxième surface de guidage (30.2, 31.2), tout en étant guidés sous précontrainte l'un par rapport à l'autre, dans lequel la première et la deuxième sections d'appui (30.11 et 30.21 ou 31.11 et 31.21) sont décalées l'une par rapport à l'autre le long de l'axe d'articulation (AS) et opposées l'une à l'autre.

10. Système de transport selon la revendication 9, **caractérisé en ce que** les deux extrémités libres (GAS1, GAS2) de l'axe d'articulation (GAS) sont guidées dans deux plans de guidage (FE1, FE2) orientés de façon opposée et parallèlement à la direction de transport (A) dans les premier et deuxième dispositifs de guidage (30, 31) et/ou **en ce que** les premier et deuxième paliers à roulement (34, 35) du premier dispositif de guidage et de support (32) sont conçus rotatifs autour de l'axe d'articulation (GAS) et immédiatement adjacents à celui-ci dans la région de la première extrémité libre (GAS1), et/ou **en ce que** les premier et deuxième paliers à roulement (36, 37) du deuxième dispositif de guidage et de support (33) sont conçus rotatifs autour de l'axe d'articulation (GAS) et immédiatement adjacents à celui-ci dans la région de la deuxième extrémité libre (GAS2).

11. Système de transport selon l'une des revendications 9 ou 10, **caractérisé en ce que** le premier palier à roulement (34) du premier dispositif de guidage et de support (32) est guidé de manière à s'appuyer sur la première section d'appui (30.11) de la première surface de guidage (30.1) en étant précontraint contre le deuxième palier à roulement (35) s'appuyant sur la deuxième section d'appui (30.21) de la deuxième surface de guidage (30.2) dans le premier dispositif de guidage (30), et le deuxième palier à roulement (36) du deuxième dispositif de guidage et de support (33) est guidé de manière à s'appuyer sur la première section d'appui (31.11) de la première surface de guidage (31.1) en étant précontraint contre le deuxième palier à roulement (37) s'appuyant sur la deuxième section d'appui (31.21) de la deuxième surface de guidage (31.2) dans le deuxième dispositif de guidage (31) et/ou **en ce que** le premier et le deuxième palier à roulement (34, 35) du premier dispositif de guidage et de support (32) sont guidés en étant précontraints par rapport au premier et au deuxième palier à roulement (36, 37) du deuxième dispositif de guidage et de support (33).

12. Système de transport selon l'une des revendications précédentes, **caractérisé en ce que** les courbes de compensation (28, 28a) sont conçues d'un seul tenant avec le guide de palettes de transport (30, 31) correspondant.

13. Système de transport selon l'une des revendications précédentes, **caractérisé en ce que** les courbes de compensation (28, 28a) sont conçues d'un seul tenant avec les déviations (U1, U2, U3).

14. Machine de traitement, par exemple un automate de montage et/ou de construction, comprenant un système de transport (1) avec des palettes de transport (3) destinées à recevoir des produits ou des objets (9), dans laquelle les palettes de transport (3) se déplacent sur une voie de déplacement (10) fermée sur elle-même, en tant déplacées de préférence de manière cadencée, et des stations de travail sont prévues sur la voie de déplacement (10),
**caractérisée en ce que**
le système de transport (1) est réalisé selon l'une des revendications précédentes.
